# EUROPEAN PATENT SPECIFICATION

(11) **EP 0 525 513 B1**
(45) Date of publication and mention of the grant of the patent: **16.01.2002**
(21) Application number: 92112054.9
(22) Date of filing: 15.07.1992
(51) Int. Cl.: G06K 9/32, G06T 7/00

(54) **Method for detecting inclination of an image of characters**
Verfahren zur Bestimmung der Neigung eines Schriftzeichen enthaltenden Bildes
Méthode pour déterminer l'inclinaison d'une image de caractères

(30) Priority: 16.07.1991 JP 20124491; 16.07.1991 JP 20124791; 16.07.1991 JP 20126891; 06.08.1991 JP 22093191
(43) Date of publication of application: 03.02.1993
(73) Proprietor: YOZAN INC., Tokyo 155 (JP); SHARP CORPORATION, Osaka 545 (JP)
(72) Inventor: Kawanaka, Seido c/o Sharp Corp., Osaka 545 (JP); Yoshikawa, Mituo c/o Sharp Corp., Osaka 545 (JP); Naito, Hiroyoshi c/o Sharp Corp., Osaka 545 (JP)
(74) Representative: Grünecker, Kinkeldey, Stockmair & Schwanhäusser Anwaltssozietät

(56) References cited:
- EP-A- 0 431 496
- EP-A- 0 431 962
- EIGHTH INTERNATIONAL CONFERENCE ON PATTERN RECOGNITION. PROCEEDINGS (CAT. NO.86CH2342-4), PARIS, FRANCE, 27-31 OCT. 1986, 434 - 436 ISBN 0-8186-0742-4 Srihari S N et al 'Document image analysis'
- SYST. COMPUT. JPN. (USA), SYSTEMS AND COMPUTERS IN JAPAN, JULY-AUG. 1985, USA, 16, 4, 66 - 75 ISSN 0882-1666 Nakamura O et al 'A character segmentation algorithm for mixed-mode communication'

## Description

The present invention relates to a method for detecting an inclination angle of an image on a paper to be input for being read, especially to a method for detecting an inclination angle so as to correct non-intended inclination of the paper to be input and read as an image by a copy machine, facsimile machine, OCR, etc.

When a paper to be input is inclined, character lines are also inclined. When it is input in such condition to a facsimile machine and an OCR, the data compression ratio lowers and the recognition ratio lowers, respectively. As for a copy machine, it is necessary to correct inclination of a paper to be copied automatically in order to stabilize the quality of copy.

Conventionally, the method using expansion, shrinking and thinning is known for recognizing an inclination angle (Nakamura, et al., "Algorithm to Extracting Character Area for Mixed-Mode Communication", The Transactions of the Institute of Electronics, Information and Communication Engineers, Vol. J67-D, No. 11, pp. 1,277-1,284, November, 1984).

According to this method, binarizing characters on a paper to be input for being read, the neighboring characters are connected by expansion. Next, the row of characters are indicated in rather thin belt by shrinking and filling hole, and after that, thinning is performed on it. The uneven part on both of ends in thinned image are made smooth by shrinking.

In such a thinned image, calculating the inclination angle of the group with the predetermined length after labeling, the inclination is regarded as that of the paper to be input.

Here, the number of expansion is determined by experience. The optimal number could not obtained unless the size, the quality, material, etc. of a paper to be input is considered by eye.

The present invention, as defined in claim 1, is aimed at solving the above problems of the prior art. The object is to provide an improved method for detecting an inclination angle (hereafter referred to as inclination) of an image of characters to be read.

According to the present invention, an image to be read is expanded twice or more times and successive expanded images are compared. The expansion is finished when the difference in area between successive expanded images is less than a predetermined value. The image of the expansion one time before the last expanded image is deemed as the optimal image for calculating inclination of character lines. Then the inclination of character lines is calculated from the expanded image or a thinned image obtained from thinning of the expanded image. The optimal number of expansions for detecting the inclination is carried out.

Figure 1 shows a flow-chart of an embodiment of a method for detecting inclination of an image of characters according to the present invention.

Figure 2 (A) shows a conceptual diagram of a pattern of a horizontal element with 0.5 deviation element.

Figure 2 (B) shows other type of a conceptual diagram of a pattern of a horizontal element with 0.5 deviation element.

Figure 2 (C) shows other type of a conceptual diagram of a pattern of a horizontal element with 0.5 deviation element.

Figure 2 (D) shows other type of a conceptual diagram of a pattern of a horizontal element with 0.5 deviation element.

Figure 2 (E) shows other type of a conceptual diagram of a pattern of a horizontal element with 0.5 deviation element.

Figure 2 (F) shows other type of a conceptual diagram of a pattern of a horizontal element with 0.5 deviation element.

Figure 2 (G) shows other type of a conceptual diagram of a pattern of a horizontal element with 0.5 deviation element.

Figure 2 (H) shows other type of a conceptual diagram of a pattern of a horizontal element with 0.5 deviation element.

Figure 2 (I) shows a conceptual diagram of a pattern of a horizontal element with no deviation.

Figure 2 (J) shows another type of conceptual diagram of a pattern of horizontal element with no deviation.

Figure 2 (K) shows a conceptual diagram of a pattern of horizontal element including a background pixel.

Figure 2 (L) shows another type of conceptual diagram of a pattern of horizontal element including a background pixel.

Figure 3 (A) shows a conceptual diagram of a pattern of a vertical element with 0.5 deviation element.

Figure 3 (B) shows other type of a conceptual diagram of a pattern of a vertical element with 0.5 deviation element.

Figure 3 (C) shows other type of a conceptual diagram of a pattern of a vertical element with 0.5 deviation element.

Figure 3 (D) shows other type of a conceptual diagram of a pattern of a vertical element with 0.5 deviation element.

Figure 3 (E) shows other type of a conceptual diagram of a pattern of a vertical element with 0.5 deviation element.

Figure 3 (F) shows other type of a conceptual diagram of a pattern of a vertical element with 0.5 deviation element.

Figure 3 (G) shows other type of a conceptual diagram of a pattern of a vertical element with 0.5 deviation element.

Figure 3 (H) shows other type of a conceptual diagram of a pattern of a vertical element with 0.5 deviation element.

Figure 3 (I) shows a conceptual diagram of a pattern of a vertical element with no deviation.

Figure 3 (J) shows another type of conceptual diagram of a pattern of vertical element with no deviation.

Figure 3 (K) shows a conceptual diagram of a pattern of vertical element including a background pixel.

Figure 3 (L) shows another type of conceptual diagram of a pattern of vertical element including a background pixel.

Figure 4 (A) shows an example of character written horizontally.

Figure 4 (B) shows an image after expansion in horizontal direction on the character written horizontally.

Figure 4 (C) shows a conceptual image after thinning on expanded image in horizontal direction.

Figure 4 (D) shows a conceptual image after shrinking on thinned image already performed expansion on horizontal direction character.

Figure 5 (A) shows an example of character written horizontally.

Figure 5 (B) shows a conceptual image after expansion in vertical direction on the character written vertically.

Figure 5 (C) shows a conceptual image after thinning on expanded image in horizontal direction.

Figure 5 (D) shows a conceptual image after shrinking on thinned image already performed expansion on vertical direction character.

Figure 6 (A) shows a conceptual horizontal pattern.

Figure 6 (B) shows a conceptual diagram including 0.5 deviation element in horizontal direction.

Figure 6 (C) shows other conceptual diagram including 0.5 deviation element in horizontal direction than Figure 6 (B).

Figure 6 (D) shows other conceptual diagram including 0.5 deviation element in horizontal direction than Figure 6 (B) and (C).

Figure 6 (E) shows other conceptual diagram including 0.5 deviation element in horizontal direction than Figure 6 (B), (C) and (D).

Figure 6 (F) shows an inclined pattern from upper left to lower right.

Figure 6 (G) shows an inclined pattern from lower left to upper right.

Figure 6 (H) shows a conceptual pattern which changes the direction of inclination from right-declining to right-rising.

Figure 6 (I) shows a conceptual pattern which changes the direction of inclination from right-rising to right-declining.

Figure 7 (A) shows a conceptual vertical pattern.

Figure 7 (B) shows a conceptual diagram including 0.5 deviation element in vertical direction.

Figure 7 (C) shows other conceptual diagram including 0.5 deviation element in vertical direction than Figure 7 (B).

Figure 7 (D) shows other conceptual diagram including 0.5 deviation element in vertical direction than Figure 7 (B) and (C).

Figure 7 (E) shows other conceptual diagram including 0.5 deviation element in vertical direction than Figure 7 (B), (C) and (D).

Figure 7 (F) shows an inclined pattern from upper left to lower right.

Figure 7 (G) shows an inclined pattern from lower left to upper right.

Figure 7 (H) shows a conceptual pattern which changes the direction of inclination from left-declining to right-declining.

Figure 7 (I) shows a conceptual pattern which changes the direction of inclination from right-declining to left-declining.

Figure 8 shows a flow-chart of an embodiment of a method for detecting inclination of an image of characters according to the present invention.

Figure 9 (A) shows a conceptual diagram of a pattern of a horizontal element with 0.5 deviation element.

Figure 9 (B) shows other type of a conceptual diagram of a pattern of a horizontal element with 0.5 deviation element than (A).

Figure 9 (C) shows other type of a conceptual diagram of a pattern of a horizontal element with 0.5 deviation element than (A) and (B).

Figure 9 (D) shows other type of a conceptual diagram of a pattern of a horizontal element with 0.5 deviation element than (A) to (C).

Figure 9 (E) shows other type of a conceptual diagram of a pattern of a horizontal element with 0.5 deviation element than (A) to (D).

Figure 9 (F) shows other type of a conceptual diagram of a pattern of a horizontal element with 0.5 deviation element than (A) to (E).

Figure 9 (G) shows other type of a conceptual diagram of a pattern of a horizontal element with 0.5 deviation element than (A) to (F).

Figure 9 (H) shows other type of a conceptual diagram of a pattern of a horizontal element with 0.5 deviation element than (A) to (G).

Figure 9 (I) shows a conceptual diagram of a pattern of a horizontal element with no deviation.

Figure 9 (J) shows another type of conceptual diagram of a pattern of horizontal element with no deviation.

Figure 9 (K) shows a conceptual diagram of a pattern of horizontal element including a background pixel.

Figure 9 (L) shows another type of conceptual diagram of a pattern of horizontal element including a background pixel.

Figure 9 (M) shows a diagonal pattern from upper left to lower right with the deviation of 1.

Figure 9 (N) shows another diagonal pattern from upper left to lower right with the deviation of 1.

Figure 9 (O) shows a diagonal pattern from lower left to upper right with the deviation of -1.

Figure 9 (P) shows a diagonal pattern from lower left to upper right with the deviation is -1.

Figure 10 (A) shows a conceptual diagram of a pattern of a vertical element with 0.5 deviation element.

Figure 10 (B) shows other type of a conceptual diagram of a pattern of a vertical element with 0.5 deviation element than (A).

Figure 10 (C) shows other type of a conceptual diagram of a pattern of a vertical element with 0.5 deviation element than (A) and (B).

Figure 10 (D) shows other type of a conceptual diagram of a pattern of a vertical element with 0.5 deviation element than (A) to (C).

Figure 10 (E) shows other type of a conceptual diagram of a pattern of a vertical element with 0.5 deviation element than (A) to (D).

Figure 10 (F) shows other type of a conceptual diagram of a pattern of a vertical element with 0.5 deviation element than (A) to (E).

Figure 10 (G) shows other type of a conceptual diagram of a pattern of a vertical element with 0.5 deviation element than (A) to (F).

Figure 10 (H) shows other type of a conceptual diagram of a pattern of a vertical element with 0.5 deviation element than (A) to (G).

Figure 10 (I) shows a conceptual diagram of a pattern of a vertical element with no deviation.

Figure 10 (J) shows another type of conceptual diagram of a pattern of vertical element with no deviation.

Figure 10 (K) shows a conceptual diagram of a pattern of vertical element including a background pixel.

Figure 10 (L) shows another type of conceptual diagram of a pattern of vertical element including a background pixel.

Figure 10 (M) shows a diagonal pattern from upper left to lower right with the deviation of -1.

Figure 10 (N) shows another diagonal pattern from upper left to lower right with the deviation of -1.

Figure 10 (O) shows a diagonal pattern from lower left to upper right with the deviation of 1.

Figure 10 (P) shows a diagonal pattern from lower left to upper right with the deviation is 1.

Figure 11 shows a flow-chart of an embodiment of a method for detecting inclination of an image of characters according to the present invention.

Figure 12 (A) shows a conceptual image extracted the contour of expanded figure of a paper written characters horizontally.

Figure 12 (B) shows a conceptual image reduced vertical elements of the contour of the expanded figure of a paper written characters horizontally.

Figure 12 (C) shows a conceptual image reduced vertical elements and shrunk with respect to a paper written characters horizontally.

Figure 12 (D) shows a conceptual image in which minute noise is reduced from the image reduced vertical elements and shrunk with respect to a paper written characters horizontally.

Figure 13 (A) shows a conceptual image extracted the contour of a expanded figure in a paper written characters vertically.

Figure 13 (B) shows a conceptual image reduced horizontal elements of the contour of a figure already performed expansion on a paper written characters vertically.

Figure 13 (C) shows a conceptual image performed shrinking already reduced the horizontal elements of the contour of a paper written characters vertically.

Figure 13 (D) shows a conceptual image reduced minute noise from the image already performed reduction of horizontal elements and shrinking.

Hereinafter, an embodiment of a method for detecting inclination of an image of characters relates to the present invention is described with reference to the attached drawings.

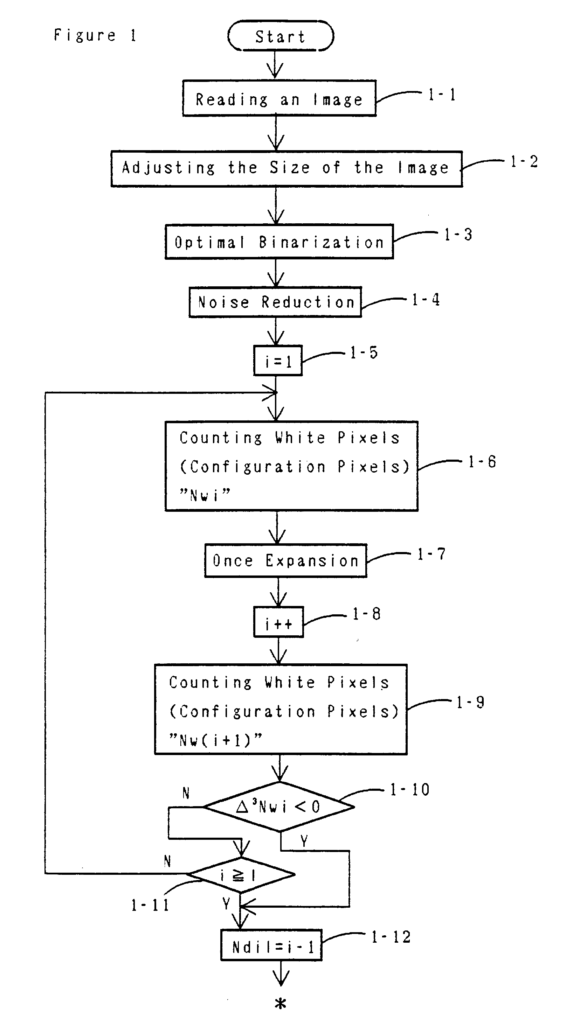

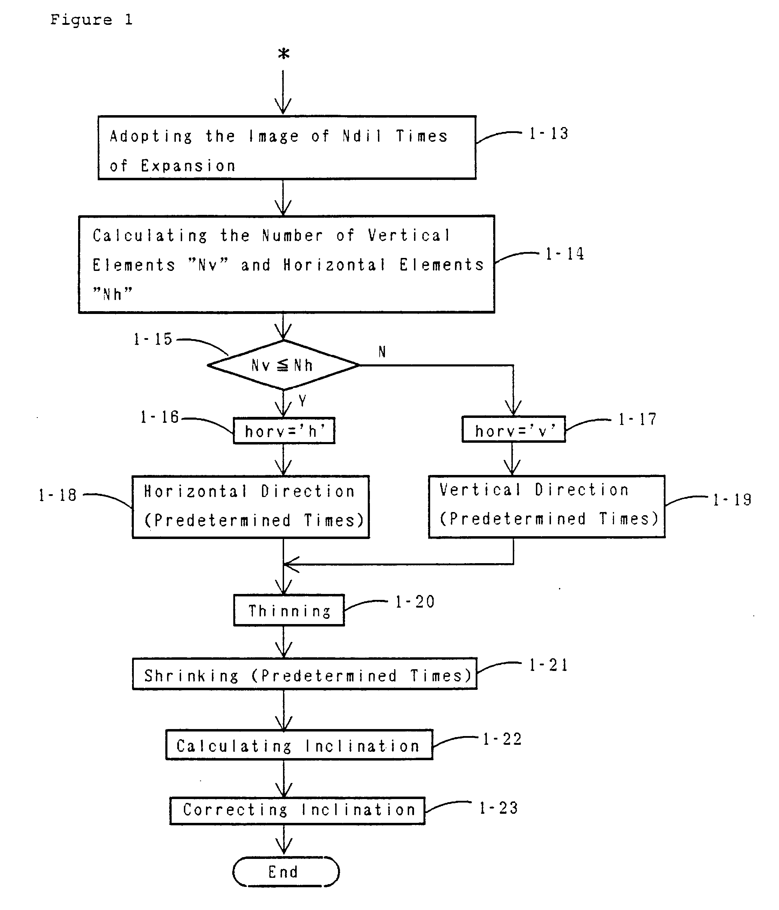

Figure 1 shows a flow-chart of an embodiment of this invention. First, a paper including characters is read by an input portion of an OCR etc. on step 1-1 and the frame size of an image is arranged into suitable one to be processed hereafter on step 1-2. For example, when the output image of a scanner has 4096× 4096 pixels and the image to be processed in image processing means has 1024× 1024 pixels, it is necessary to make a scale-down into the size of 1/4. On making the scale-down, the information of graylevel in an original image can be stored in maximum when it is performed the processing that regards the mean value of the predetermined configuration as the density of the particular pixel. It means that when the image is scaled down into 1/4, the density of the predetermined pixel (the left-upper pixel in the configuration, for example) is determined by the mean value of 4× 4 configuration.

Next, calculating the histogram of the density of the image, the image is binarized using the optimal threshold on step 1-3 and noise is reduced on step 1-4. There are efficient ways to calculate the optimal threshold: a) regarding the center value of the density as the optimal threshold, b) mode method, c) discrimination analysis method, d) p-tile method, etc. The effective ways to reduce noise are reduction of an isolate point, median filter, and so forth.

It is easy to find inclination by i) converting each line into a figure of a belt after the optimal times of expansion in the direction of the main element of the paper to be input (the paper written character in the horizontal direction is expanded in the horizontal direction, and in the same way, the paper written character in the vertical direction is expanded in the vertical direction), ii) thinning the figure of a belt.

Here, the calculation of Ndil of the number of optimal expansion is described (from step 1-5 to step 1-13).

On step 1-6, the number of non-background pixels, that is, white pixels after noise reduction is counted and the initial value of the number of non-background pixels (white pixels) is calculated. On step 1-5, loop counter for counting the number of expansion "i" is initialized in order to performed expansion repeatedly.

Every time of expansion on step 1-7, loop counter "i" is increased on step 1-8, the number of non-background pixels (white pixels) Nw(i+1) is counted on step 1-9, and the cubic differential is calculated on the number of non-background pixels (white pixels). The cubic differential is calculated by the formula below.${\text{Δ}}^{\text{3}} {\text{Nwi=Δ}}^{\text{2}} {\text{Nw(i+1)-Δ}}^{\text{2}} \text{Nwi}$ where,${\text{△}}^{\text{2}} \text{Nwi=Δ Nw(i+1)-Δ Nwi}$$\text{Δ Nwi =Nw(i+1)-Nwi}$

When the result of Δ ³Nwi is minus, the line are already merged together and consequently, the slow-down of the increase pace of the area is found on step 1-10. On this step, quitting the loop of expansion, the formula below showing the number of times until the previous time is adopted on step 1-13 as the optimal number of time.$\text{Ndil=i-1}$ The expanded image on the previous time is used for finding the main element on step 1-14. In this way, the beginning of the merging in wide view can be surely found and the optimal number of expansion can be calculated. There can be the case that the beginning of merging is unclear by the reflection of noise which cannot be reduced by the noise reduction above. In order to deal with such a case, the maximal limit "I" of the number of times of expansions is settled beforehand and expansion is terminated even when the cubic differential does not come to a minus value on step 1-11. In this case the optimal number of times of expansions is (I-1) times.

The main element of the paper with character is found, that is, it is distinguished whether it is written in horizontal direction or on vertical direction. It is distinguished by totaling each inclination element of each part of the image on step 1-14.

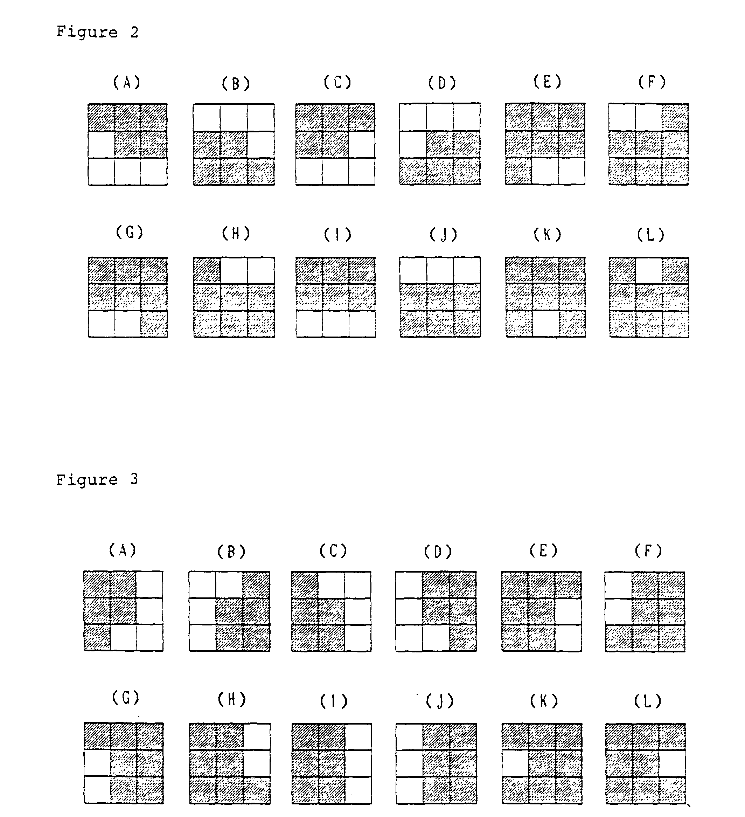

On finding the inclination elements, the patterns from (A) to (L) shown in Figure 2 are regarded as horizontal elements and the patterns from (A) to (L) in Figure 3 are regarded as vertical elements. The main element in the image is recognized according to the number of each patterns. The patterns are the contour of a figure. Defining the inclination of a contour by the line of two pixels, it is regarded as a horizontal pattern and a vertical pattern when the total of the inclination in the configuration is near the horizontal direction and vertical direction, respectively. Here with respect to the pattern with one background pixel around the configuration ((K)s and (L)s in Figures 2 and 3), it is regarded as a vertical pattern when the background pixel is on the right or the left of the configuration, and regarded as a horizontal pattern when it is above or below the configuration. The diagonal pattern of 45° does not belong to any classification above.

Defining the number of pattern in vertical direction and in horizontal direction as "Nv" and "Nh", respectively, the image is recognized to be in horizontal direction when Nv≦ Nh, and it is recognized to be vertical direction in other cases on step from 1-15 to 1-17. The indication of the main element is defined as "horv", "v" is substituted for it when the image is in vertical direction and "h" is substituted when it is in horizontal direction on steps 1-16 and 1-17.

The image is expanded by predetermined times in the direction of the main element and the characters on each line is merged. The expansion times should be the minimal number of times for the characters to be surely merged. 9Ndil/4 times etc. are adopted according to "Ndil" by experience.

Each line in the image after the optimal number of expansion is roughly a rectangle, which is thinned. Through thinning, a figure comes to that with one pixel width without changing without the topology of the figure by deleting the outermost pixels on the figure by one pixel width sequentially. The effective methods for thinning are Hildich method, the method in Japanese Patent Publication Number 64-13680. It is possible to obtain the line on the center or near center of the rough rectangle, and consequently, effective elements can be obtained for calculating inclination of a figure by this thinning.

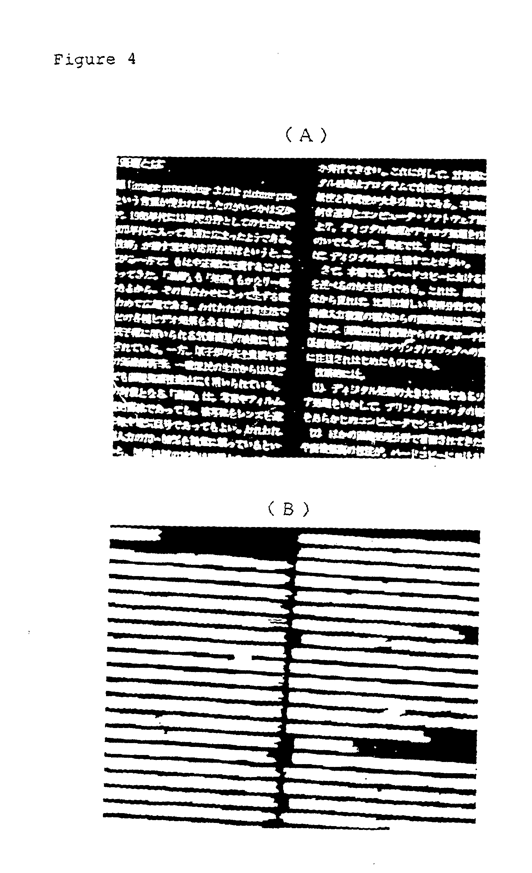

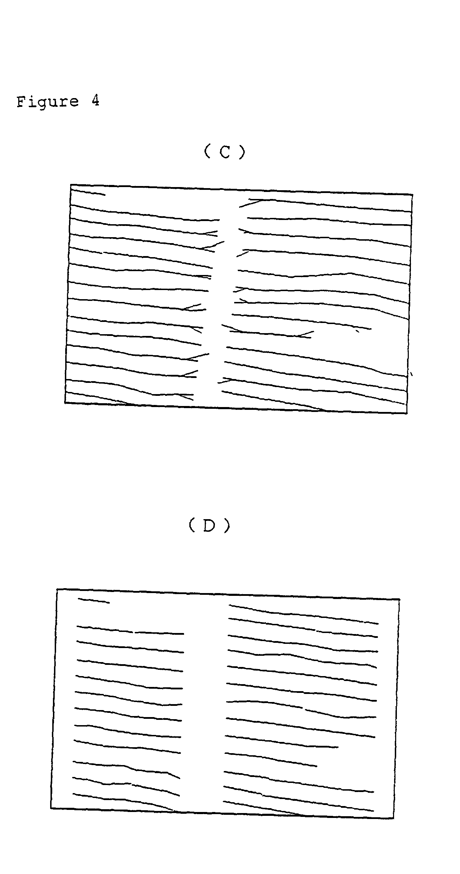

However there may occur a case that the end of thinned figure branches or curves as in Figure 4 (c) because of noise or the shape on the end of the rectangle. In order to reduce the improper part preventing the precise calculation, the end point is shrunk after thinning (Figure 4 (D)). The shrinking reduces the improper parts on the both ends and the inclination can be calculated hereafter precisely.

The number of times of shrinking should be the minimum: according to the Ndil, (15/4)× Ndil+1 can be adopted by experience. This formula means the deletion of the line with the length equal to about 1 to 1 and a half character(s).

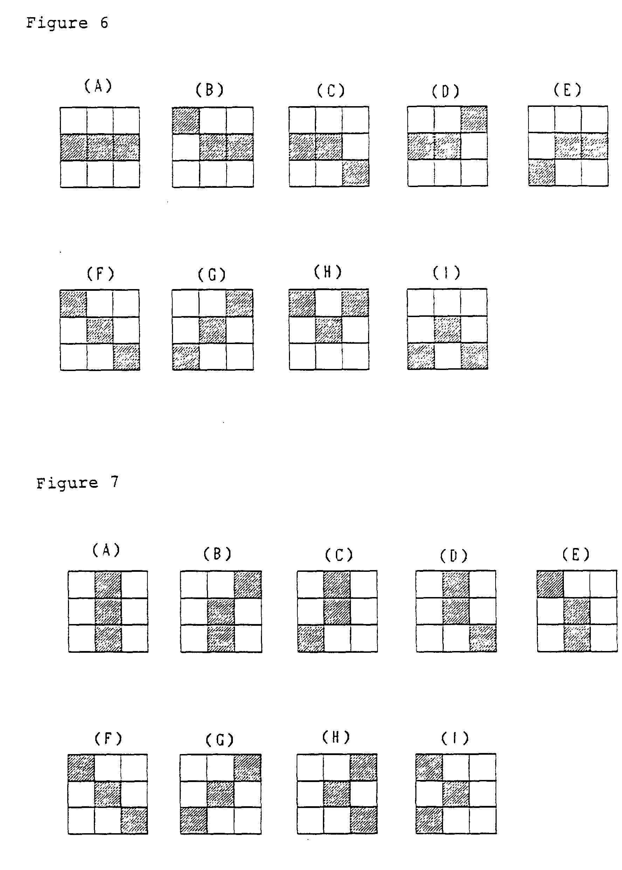

In order to calculate the inclination mainly with horizontal elements, the number of each pattern from (A) to (I) in Figure 6 is counted, the counted value is multiplied with a coefficient and summed. The corresponding numeral to be multiplied with each pattern is given below.

The figures of horizontal pattern and the corresponding coefficients are:
(A) Horizontal Pattern of 3 Pixels
   Coefficient is 0.
(B) (2 Pixels Pattern Inclined from Left Upper to Right Lower)+(2 Pixels Horizontal Pattern)
   Coefficient is 0.5.
(C) (2 Pixels Horizontal Pattern)+(2 Pixels Pattern Inclined from Left Upper to Right Lower)
   Coefficient is 0.5.
(D) (2 Pixels Horizontal Pattern)+(2 Pixels Pattern Inclined from Left Lower to Right Upper)
   Coefficient is -0.5.
(E) (2 Pixels Pattern Inclined from Left Lower to Right Upper)+(2 Pixels Horizontal Pattern)
   Coefficient is -0.5.
(F) 3 Pixels Pattern Inclined from Left Upper to Right Lower
   Coefficient is 1.
(G) 3 Pixels Pattern Inclined from Left Lower to Right Upper
   Coefficient is -1.
(H) (2 Pixels Pattern Inclined from Left Upper to Right Lower)+(2 Pixels Pattern Inclined from Left Lower to Right Upper)
   Coefficient is 0.
(I) (2 Pixels Pattern Inclined from Left Lower to Right Upper)+(2 Pixels Pattern Inclined from Right Upper to Left Lower)
   Coefficient is 0.

These coefficients are deviation elements in horizontal elements. 3 pixels diagonal patterns are given the absolute value "1". Defining the total number of patterns from (A) to (I) in the whole image as from "Na" to "Ni", respectively, the inclined angle θ can be calculated by the formula below.${\text{θ =tan}}^{\text{-1}} \text{[ {0.5(Nb+Nc)-0.5(Nd+Ne)+Nf-Ng} /(Na+Nb} \text{+Nc+Nd+Ne+Nf+Ng+Nh+Ni)]}$

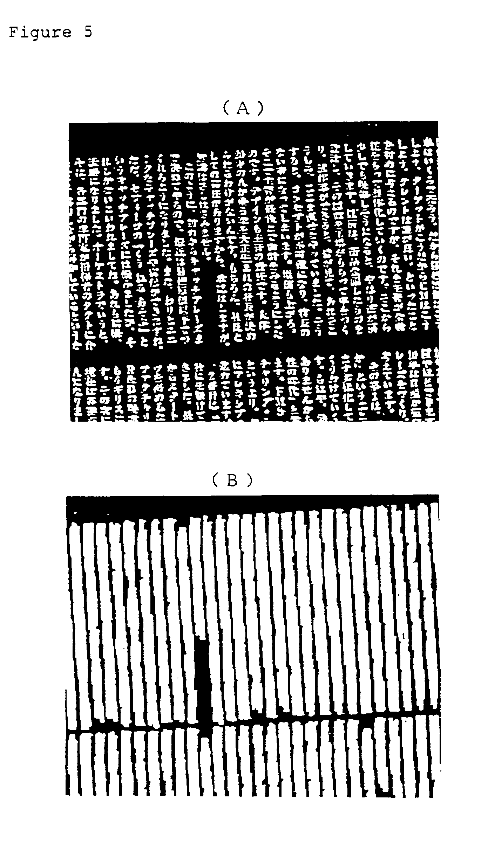

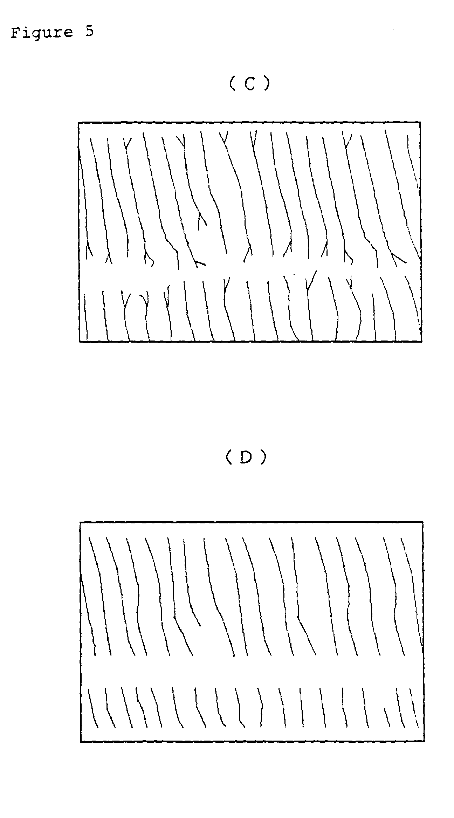

The paper to be input written characters in the vertical direction can be processed in the same way. The processing patterns with respect to vertical direction are shown in Figure 5 from (A) to (D) which are corresponding to Figure 4 from (A) to (D). The vertical patterns corresponding to Figure 6 from (A) to (I) are shown in Figure 7 from (A) to (I).

The figures of vertical pattern and the corresponding coefficients are:
(A) 3 Pixels Vertical Pattern
   Coefficient is 0.
(B) (2 Pixels Pattern Inclined from Upper Right to Lower Left)+(2 Pixels Vertical Pattern)
   Coefficient is 0.5.
(C) (2 Pixels Vertical Pattern)+(2 Pixels Pattern Inclined from Upper Right to Lower Left)
   Coefficient is 0.5.
(D) (2 Pixels Vertical Pattern)+(2 Pixels Pattern Inclined from Upper Left to Lower Right)
   Coefficient is -0.5.
(E) (2 Pixels Pattern Inclined from Upper Left to Lower Right)+(2 Pixels Vertical Pattern)
   Coefficient is -0.5.
(F) 3 Pixels Pattern Inclined from Upper Left to Lower Right
   Coefficient is -1.
(G) 3 Pixels Pattern Inclined from Lower Left to Upper Right
   Coefficient is 1.
(H) (2 Pixels pattern Inclined from Upper Right to Lower Left)+(2 Pixels Pattern Inclined from Upper Left to Lower Right)
   Coefficient is 0.
(I) (2 Pixels Pattern Inclined from Upper Left to Lower Right)+(2 Pixels Pattern Inclined from Upper Right to Lower Left)
   Coefficient is 0.

Defining the total number of patterns from (A) to (I) as "Na" to "Ni", respectively, the inclination angle θ is given by the formula below.${\text{θ =tan}}^{\text{-1}} \text{[ {0.5(Nb+Nc)-0.5(Nd+Ne)-Nf+Ng} /(Na+Nb} \text{+Nc+Nd+Ne+Nf+Ng+Nh+Ni)]}$

In this way, it is possible to calculate the inclination easily and precisely by i) generating a expanded figure through the optimal number of times expansion in the main element direction, ii) thinning the expanded image, iii) calculating the elements in the both of vertical and horizontal directions, iv) the inclination is found according to the statistics value with respect to the more element between the two kinds of elements.

Thereafter, the image can be rotated so as to be aligned to the horizontal or vertical line. Such rotation is performed through Affine transformation by a special purpose IC -- Affine transformation IC.

Hereinafter, the second embodiment of a method for detecting inclination of an image of a paper to be input relates to the present invention is described with reference to the attached drawings.

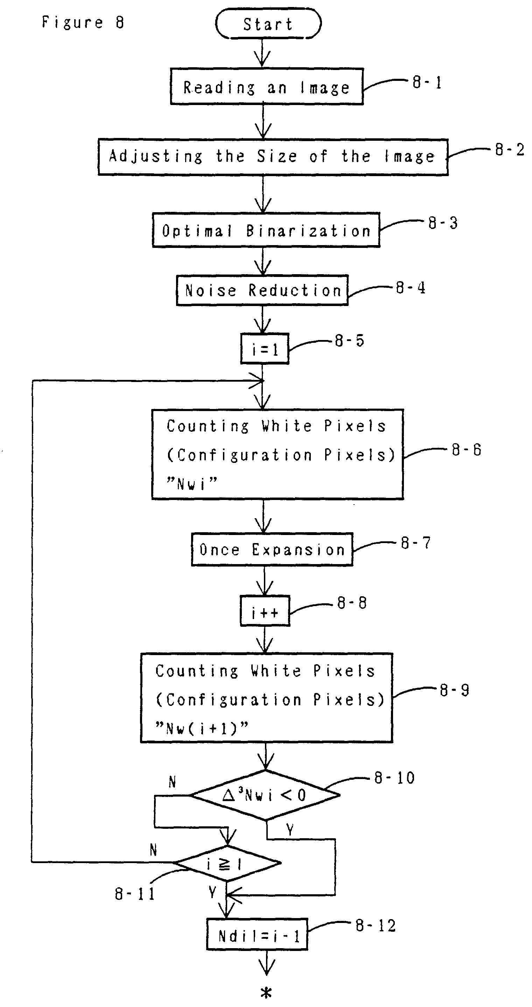

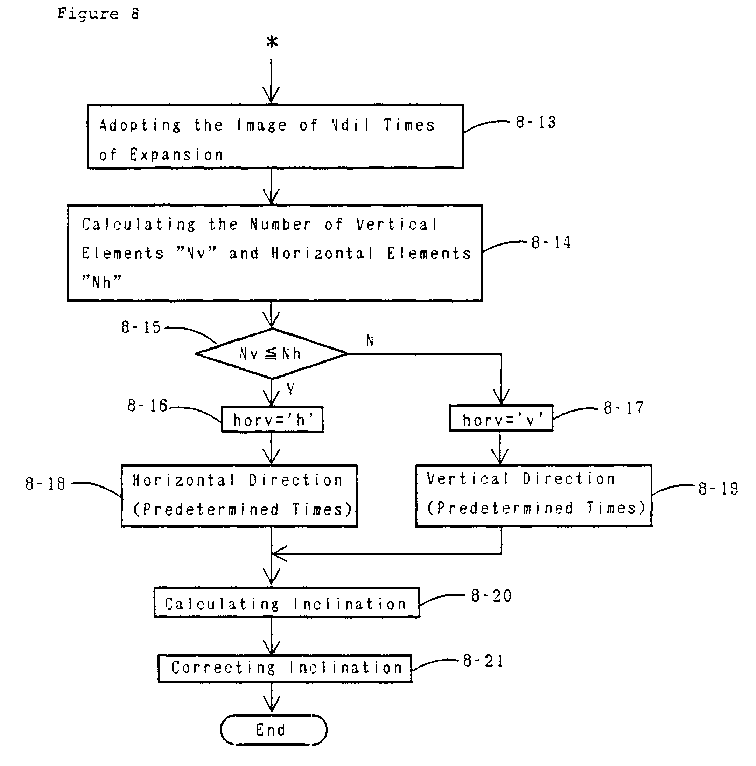

Figure 8 shows a flow-chart of the second embodiment of the present invention.

In this embodiment, process steps from 8-1 to 8-19 are equivalent to those in Figure 1. In the step 8-18 or 8-19, the optimal image for calculating inclination of character lines.

In the step 8-20, a pixel pattern on the peripheral of the character line in the expanded image. The expanded image is similar to that in Figure 4 (B) or Figure 5 (B).

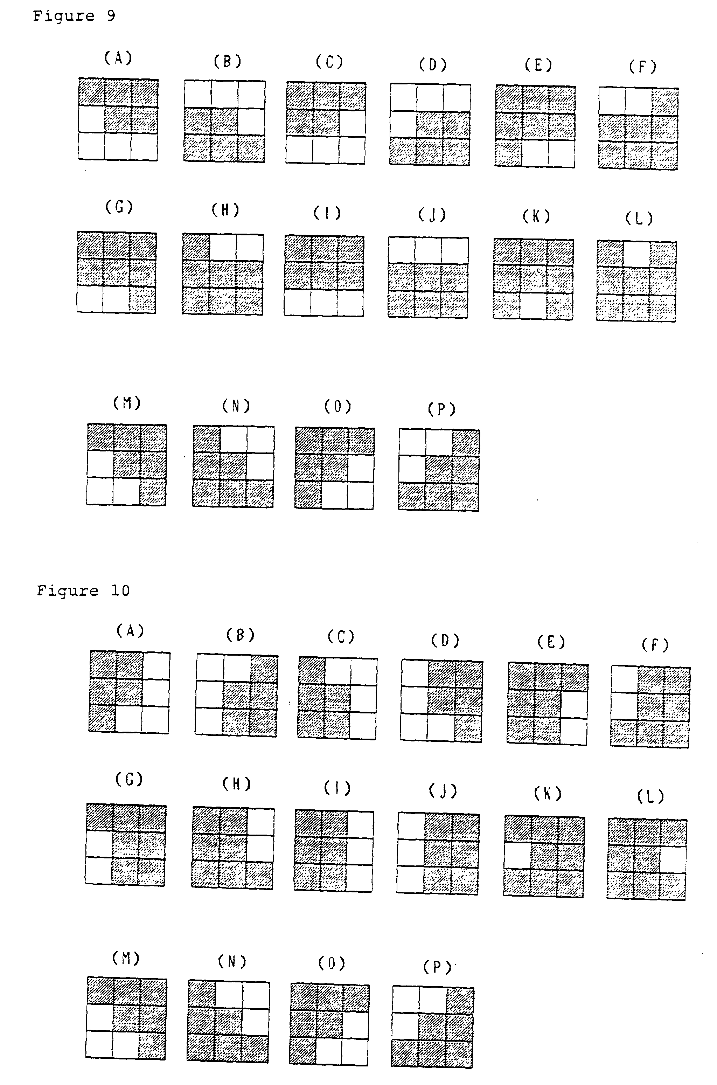

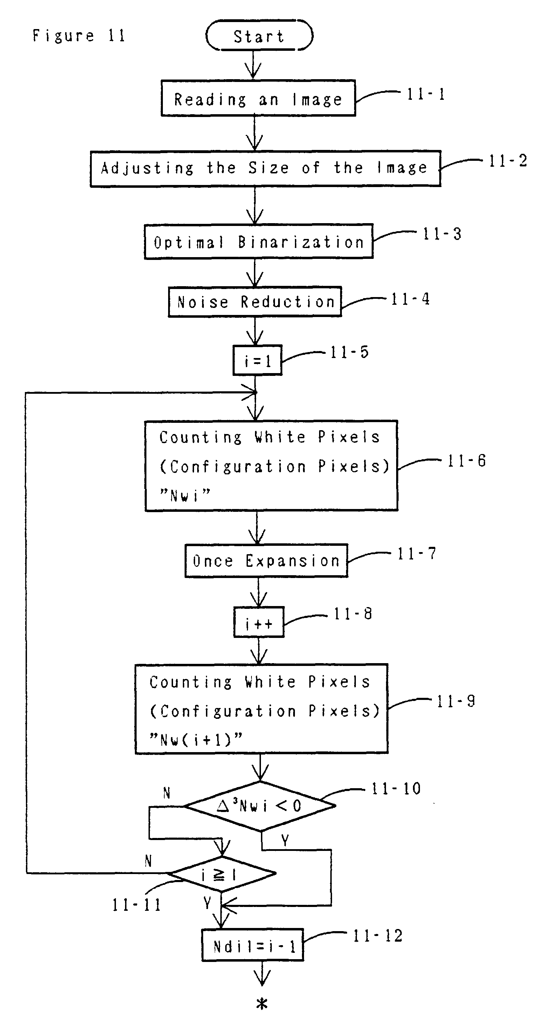

In order to calculate the inclination mainly with horizontal elements, the number of each pattern from (A) to (P) in Figure 9 is counted, the counted value is multiplied with a coefficient and summed. The corresponding numeral to be multiplied with each pattern is given below. Here, a configuration pixel is black.

The figures of horizontal pattern and the corresponding coefficients are:
(A) (2 Pixels Pattern Inclined from Left Upper to Right Lower)+(2 Pixels Horizontal Pattern)
   The pattern is cut one from the bottom of the configuration.
   Coefficient is 0.5.
(B) (2 Pixels Horizontal Pattern)+(2 Pixels Pattern Inclined from Left Upper to Right Lower)
   The pattern is cut one from the upper part of the configuration.
   Coefficient is 0.5.
(C) (2 Pixels Horizontal Pattern)+(2 Pixels Pattern Inclined from Left Lower to Right Upper)
   The pattern is cut one from the bottom of the configuration.
   Coefficient is -0.5.
(D) (2 Pixels Pattern Inclined from Left Lower to Right Upper)+(2 Pixels Horizontal Pattern)
   The pattern is cut one from the upper part of the configuration.
   Coefficient is -0.5.
(E) (2 Pixels Pattern Inclined from Left Lower to Right Upper)+(2 Pixels Horizontal Pattern)
   The pattern is cut one from the bottom of the configuration.
   Coefficient is -0.5.
(F) (2 Pixels Horizontal Pattern)+(2 Pixels Pattern Inclined from Left Lower to Right Upper)
   The pattern is cut one from the upper part of the configuration.
   Coefficient is -0.5.
(G) (2 Pixels Horizontal Pattern)+(2 Pixels Pattern Inclined from Left Upper to Right Lower)
   The pattern is cut one from the bottom of the configuration.
   Coefficient is 0.5.
(H) (2 Pixels Pattern Inclined from Left upper to Right Lower)+(2 Pixels Horizontal Pattern)
   The pattern is cut one from the upper part of the configuration.
   Coefficient is 0.5.
(I) Horizontal Pattern of 3 Pixels
   The pattern is cut one from the bottom of the configuration.
   Coefficient is 0.
(J) Horizontal Pattern of 3 Pixels
   The pattern is cut one from the upper part of the configuration.
   Coefficient is 0.
(K) (2 Pixels Pattern Inclined from Left Lower to Right Upper)+(2 Pixels Pattern Inclined from Right Upper to Left Lower)
   The pattern is cut one from the bottom of the configuration.
   Coefficient is 0.
(L) (2 Pixels Pattern Inclined from Left Upper to Right Lower)+(2 Pixels Pattern Inclined from Left Lower to Right Upper)
   The pattern is cut one from the upper part of the configuration.
   Coefficient is 0.
(M) 3 Pixels Pattern Inclined from Left Upper to Right Lower
   The pattern is cut one from the bottom of the configuration.
   Coefficient is 1.
(N) 3 Pixels Pattern Inclined from Left Upper to Right Lower
   The pattern is cut one from the upper part of the configuration.
   Coefficient is 1.
(O) 3 Pixels Pattern Inclined from Left Lower to Right Upper
   The pattern is cut one from the bottom of the configuration.
   Coefficient is -1.
(P) 3 Pixels Pattern Inclined from Left Lower to Right Upper
   The pattern is cut one from the upper part of the configuration.
   Coefficient is -1.

These coefficients are deviation elements in horizontal elements. 3 pixels diagonal patterns are given the absolute value "1". Defining the total number of patterns from (A) to (P) in the whole image as from "Na" to "Np", respectively, the inclination angle θ can be calculated by the formula below.${\text{θ =tan}}^{\text{-1}} \text{[ {0.5(Na+Nb+Ng+Nh)-0.5(Nc+Nd+Ne+Nf)+Nm+Nn-No} \text{-Np/(Na+Nb+Nc+Nd+Ne+Nf+Ng+Nh+Ni+Nj+Nk+Nl} \text{+Nm+Nn+No+Np)]}$

The paper to be input written characters in the vertical direction can be processed in the same way. The processing patters with respect to vertical direction are shown in Figure 2 from (A) to (P) which are corresponding to Figure 3 from (A) to (P).

The figures of vertical pattern and the corresponding coefficients are:
(A) (2 Pixels Vertical Pattern)+(2 Pixels Pattern Inclined from Upper Right to Lower Left)
   The pattern is cut one from the right side of the configuration.
   Coefficient is 0.5.
(B) (2 Pixels Pattern Inclined from Upper Right to Lower Left)+(2 Pixels Vertical Pattern)
   The pattern is cut one from the left side of the configuration.
   Coefficient is 0.5.
(C) (2 Pixels Pattern Inclined from Upper Left to Lower Right)+(2 Pixels Vertical Pattern)
   The pattern is cut one from the right side of the configuration.
   Coefficient is -0.5.
(D) (2 Pixels Vertical Pattern)+(2 Pixels Pattern Inclined from Upper Left to Lower Right)
   The pattern is cut one from the left side of the configuration.
   Coefficient is -0.5.
(E) (2 Pixels Pattern Inclined from Upper Right to Lower Left)+(2 Pixels Vertical Pattern)
   The pattern is cut one from the right side of the configuration.
   Coefficient is 0.5.
(F) (2 Pixels Vertical Pattern)+(2 Pixels Pattern Inclined from Upper Right to Lower Left)
   The pattern is cut one from the left side of the configuration.
   Coefficient is 0.5.
(G) (2 Pixels Pattern Inclined from Upper Left to Lower Right)+(2 Pixels Vertical Pattern)
   The pattern is cut one from the left side of the configuration.
   Coefficient is -0.5.
(H) (2 Pixels Vertical Pattern)+(2 Pixels Pattern Inclined from Upper Left to Lower Right)
   The pattern is cut one from the right side of the configuration.
   Coefficient is -0.5.
(I) 3 Pixels Vertical Pattern
   The pattern is cut one from the right side of the configuration.
   Coefficient is 0.
(J) 3 Pixels Vertical Pattern
   The pattern is cut one from the left side of the configuration.
   Coefficient is 0.
(K) (2 Pixels Pattern Inclined from Upper Left to Lower Right)+(2 Pixels Pattern Inclined from Upper Right to Lower Left)
   The pattern is cut one from the left side of the configuration.
   Coefficient is 0.
(L) (2 Pixels pattern Inclined from Upper Right to Lower Left)+(2 Pixels Pattern Inclined from Upper Left to Lower Right)
   The pattern is cut one from the right side of the configuration.
   Coefficient is 0.
(M) 3 Pixels Pattern Inclined from Upper Left to Lower Right
   The pattern is cut one from the left side of the configuration.
   Coefficient is -1.
(N) 3 Pixels Pattern Inclined from Upper Left to Lower Right
   The pattern is cut one from the right side of the configuration.
   Coefficient is -1.
(O) 3 Pixels Pattern Inclined from Lower Left to Upper Right
   The pattern is cut one from the right side of the configuration.
   Coefficient is 1.
(P) 3 Pixels Pattern Inclined from Lower Left to Upper Right
   The pattern is cut one from the left side of the configuration.
   Coefficient is 1.

Defining the total number of patterns from (A) to (P) as "Na" to "Np", respectively, the inclination angle θ is given by the formula below.${\text{θ =tan}}^{\text{-1}} \text{[ {0.5(Na+Nb+Ne+Nf)-0.5(Nc+Nd+Ng+Nh)-Nm-N+No} \text{+Np} /(Na+Nb+Nc+Nd+Ne+Nf+Ng+Nh+Ni+Nj} \text{+Nk+Nl+Nm+Nn+No+Np)]}$

Therefore, this inclination can be calculated without the process of thinning, so the process is easier and faster.

Hereinafter, the third embodiment of a method for detecting inclination of an image of a paper to be input relates to the present invention is described with reference to the attached drawings.

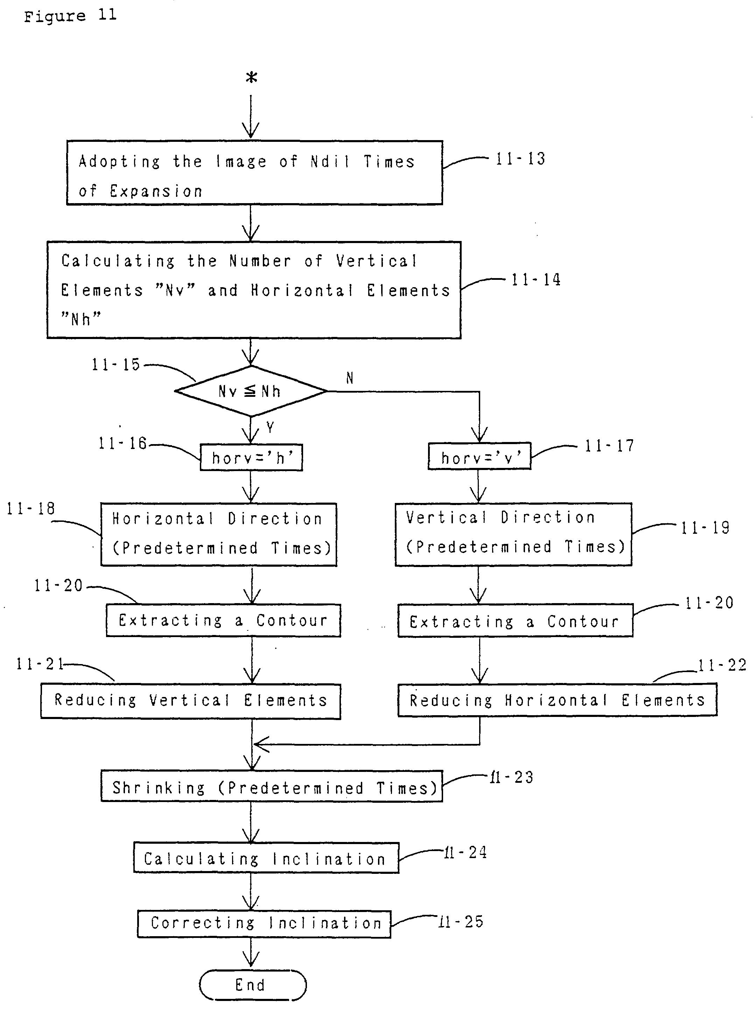

Figure 11 shows a flow-chart of an embodiment of this invention. In this embodiment, process steps from 11-1 to 11-19 are equivalent to those in Figure 1. In the step 11-18 or 11-19, the optimal image for calculating inclination of character lines.

Each line in the image after the optimal number of expansion is roughly a rectangle, and the calculation of the rectangle is easy.

In the steps 11-10, the contour of each line is extracted through differentiation, subtraction of successive expanded images or any other processing.

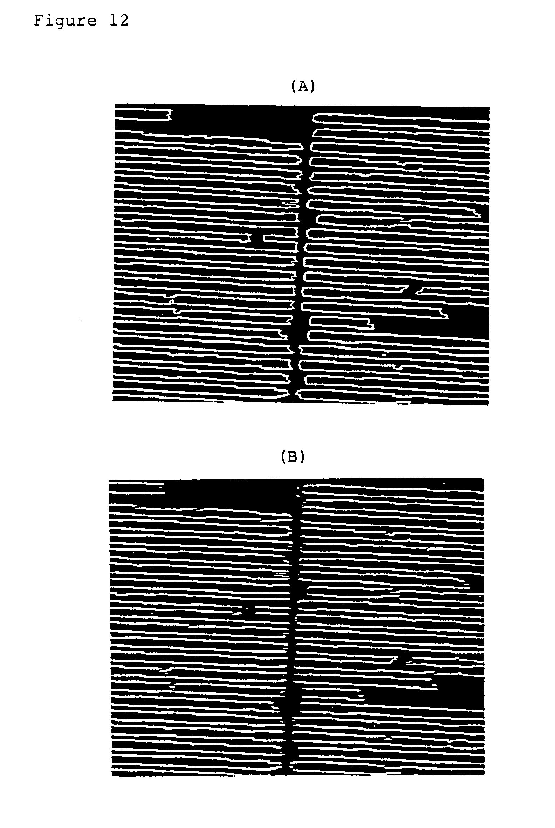

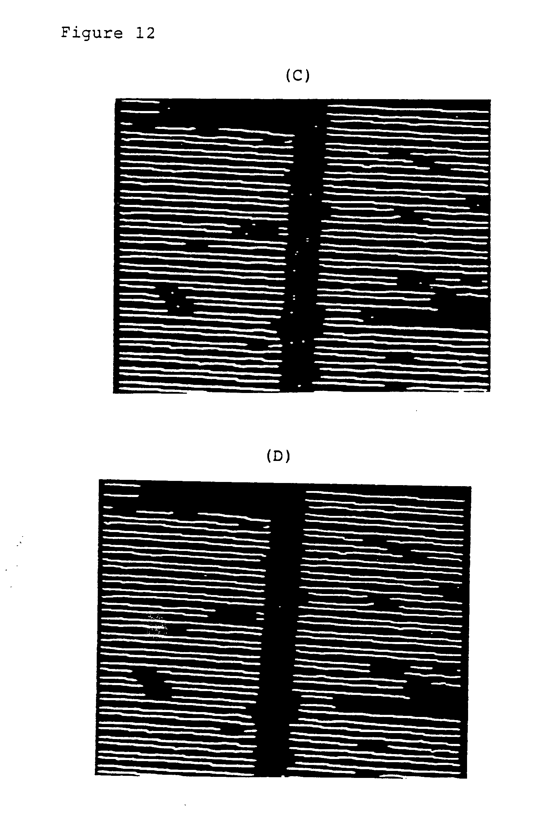

Figure 4 (A) is a paper written characters horizontally to be input. When it is expanded predetermined times above, the result is shown in Figure 4 (B). Almost all the neighbor characters in Figure 4 (B) in the same line are merged together and they make one line. With respect to the expanded image, the contour is extracted as in Figure 12 (A) and vertical element is reduced by the step 11-21, as in Figure 12 (B). Only the main element in the paper is extracted as an image by these steps and the calculation of the inclination on the following step is easy.

As shown in Figure 12 (B), a diagonal element is generated on the both ends of each line because the image receives the reflection of vertical element. The improper parts on the both ends are reduced by shrinking in the step 11-23.

The number of times of shrinking should be the minimum: according to the Ndil, (15/4)× Ndil+1 can be adopted by experience. This formula means the deletion of the line with the length equal to about 1 to 1 and a half character(s). Figure 12 (C) shows the result after shrinking. Each line is displayed approximate straight line. As a little minute noise is included in Figure 12 (C), inclination is calculated with respect to the image reduced noise as in Figure 12 (D).

In order to calculate the inclination mainly with horizontal elements, the number of each pattern from (A) to (I) in Figure 6 is counted, the counted value is multiplied with a coefficient and summed. The corresponding numeral to be multiplied with each pattern is below.

The figures of horizontal pattern and the corresponding coefficients are:
(A) Horizontal Pattern of 3 Pixels
   Coefficient is 0.
(B) (2 Pixels Pattern Inclined from Left Upper to Right Lower)+(2 Pixels Horizontal Pattern)
   Coefficient is 0.5.
(C) (2 Pixels Horizontal Pattern)+(2 Pixels Pattern Inclined from Left Upper to Right Lower)
   Coefficient is 0.5.
(D) (2 Pixels Horizontal Pattern)+(2 Pixels Pattern Inclined from Left Lower to Right Upper)
   Coefficient is -0.5.
(E) (2 Pixels Pattern Inclined from Left Lower to Right Upper)+(2 Pixels Horizontal Pattern)
   Coefficient is -0.5.
(F) 3 Pixels Pattern Inclined from Left Upper to Right Lower
   Coefficient is 1.
(G) 3 Pixels Pattern Inclined from Left Lower to Right Upper
   Coefficient is -1.
(H) (2 Pixels Pattern Inclined from Left Upper to Right Lower)+(2 Pixels Pattern Inclined from Left Lower to Right Upper)
   Coefficient is 0.
(I) (2 Pixels Pattern Inclined from Left Lower to Right Upper)+(2 Pixels Pattern Inclined from Right Upper to Left Lower)
   Coefficient is 0.

These coefficients are deviation elements in horizontal elements. 3 pixels diagonal patterns are given the absolute value "1". Defining the total number of patterns from (A) to (I) in the whole image as from "Na" to "Ni", respectively, the inclination angle θ can be calculated by the formula below.${\text{θ =tan}}^{\text{-1}} \text{[{0.5(Nb+Nc)-0.5(Nd+Ne)+Nf-Ng} /(Na+Nb} \text{+Nc+Nd+Ne+Nf+Ng+Nh+Ni)]}$

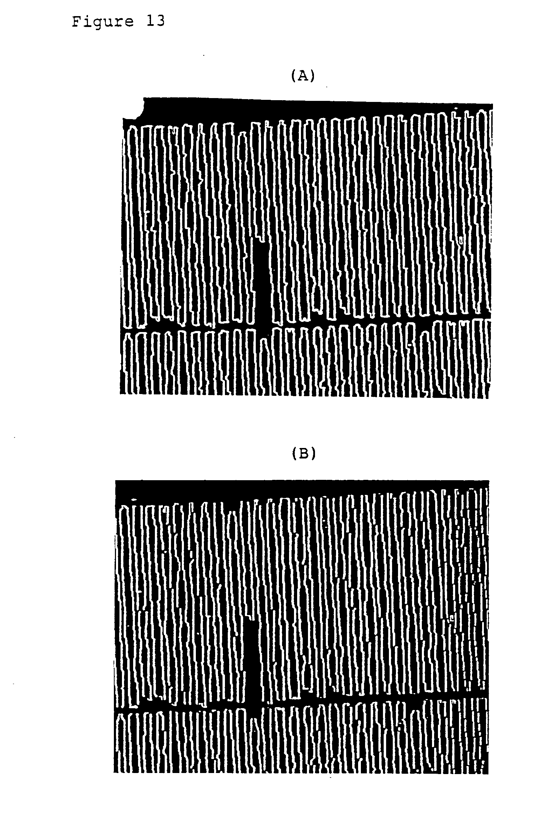

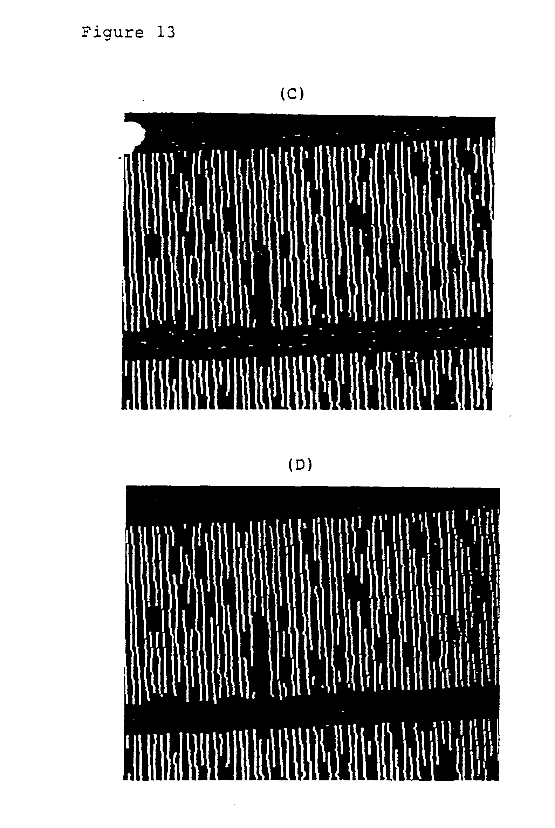

The paper to be input written characters in the vertical direction can be processed in the same way. Figures 13 (A) to (D) are process results of the vertical image in Figures 5 (A) and (B), corresponding to the process result of horizontal lines. The vertical patterns corresponding to Figure 6 from (A) to (I) are shown in Figure 7 from (A) to (I).

The figures of vertical pattern and the corresponding coefficients are:
(A) 3 Pixels Vertical Pattern
   Coefficient is 0.
(B) (2 Pixels Pattern Inclined from Upper Right to Lower Left)+(2 Pixels Vertical Pattern)
   Coefficient is 0.5.
(C) (2 Pixels Vertical Pattern)+(2 Pixels Pattern Inclined from Upper Right to Lower Left)
   Coefficient is 0.5.
(D) (2 Pixels Vertical Pattern)+(2 Pixels Pattern Inclined from Upper Left to Lower Right)
   Coefficient is -0.5.
(E) (2 Pixels Pattern Inclined from Upper Left to Lower Right)+(2 Pixels Vertical Pattern)
   Coefficient is -0.5.
(F) 3 Pixels Pattern Inclined from Upper Left to Lower Right
   Coefficient is -1.
(G) 3 Pixels Pattern Inclined from Lower Left to Upper Right
   Coefficient is 1.
(H) (2 Pixels pattern Inclined from Upper Right to Lower Left)+(2 Pixels Pattern Inclined from Upper Left to Lower Right)
   Coefficient is 0.
(I) (2 Pixels Pattern Inclined from Upper Left to Lower Right)+(2 Pixels Pattern Inclined from Upper Right to Lower Left)
   Coefficient is 0.

Defining the total number of patterns from (A) to (I) as "Na" to "Ni", respectively, the inclination angle θ is given by the formula below.${\text{θ =tan}}^{\text{-1}} \text{[{0.5(Nb+Nc)-0.5(Nd+Ne)-Nf+Ng} /(Na+Nb} \text{+Nc+Nd+Ne+Nf+Ng+Nh+Ni)]}$

After the calculation of the angle of an inclination, the image is performed Affine transformation so as to correct the inclination after the calculation of the angle. Affine transformation can be executed by matrix operation using software or address transformation using exclusive IC.

When an inclination is calculated directly with respect to the figure in Figure 4 (B) and Figure 5 (B), the vertical and horizontal patterns shown in Figure 2 and Figure 3 are used as below, as described concerning to the first embodiment.

It is possible to calculate precisely and easily an inclination by generating an expanded image by expanding it the optimal number of times of expansion in the direction of the main element and calculating the inclination according to the contour of the expanded image, without extraction of contours. The process of thinning is unnecessary.

As mentioned above, inclination of character lines is detected easily as well as precisely without labeling. Therefore, character lines more than the maximal labeling number can be processed. The inclination correction can be performed according to the inclination detected by means of software or special purpose ICs.

## Claims

1. Method for detecting an inclination angle of an image containing lines of characters, said inclination angle being determined from inclination coefficients, said method comprising the steps of:
expanding (1-7, 8-7, 11-7) said image until characters in the same line fuse with each other in the expanded image, said fusion being found by using a difference in the number of non-background pixels (1-10, 8-10, 11-10) in images of successive expansions,
dividing said expanded image (1-13, 8-13, 11-13) into a plurality of pixel matrices of predetermined size,
classifying the pixel pattern of each pixel matrix as being either horizontal or vertical, as detected from contours of said lines of fused characters
counting (1-14, 8-14, 11-14) the number of pixel matrices that have pixel patterns classified as horizontal and the number of pixel matrices that have pixel patterns classified as vertical, in order to determine (1-15, 8-15, 11-15) whether the image is roughly horizontal or vertical,
assigning inclination coefficients to said pixel matrices, and
calculating the inclination angle of the image (1-22, 8-20, 11-24) based on the inclination coefficients of the pixel matrices.

2. The method for detecting an inclination angle as claimed in claim 1, wherein said difference is defined as a cubic differential of said area.

3. The method for detecting an inclination angle as claimed in claim 1, said method comprising the further steps of:
thinning (1-20) said expanded image,
shrinking (1-21) the thinned image to reduce improper parts in said thinned image, and
classifying the pixel pattern of each pixel matrix of the thinned image and
assigning an inclination coefficient to the respective pixel matrix and using said inclination coefficients of said pixel matrices to calculate said inclination angle of the image.

4. The method for detecting an inclination angle as claimed in claim 1, wherein the pixel matrix is classified as horizontal or vertical based on a pixel pattern on the outer part of a pixel matrix in said image.

5. The method for detecting an inclination angle as claimed in claim 1, wherein the pixel matrix is classified as horizontal or vertical based on a pixel pattern of a contour extracted from a configuration in said image.

6. The method for detecting an inclination angle as claimed in claim 1, wherein said coefficient is defined as deviations in direction from a reference direction.

7. The method for detecting an inclination angle as claimed in claim 6, wherein said reference direction is defined as horizontal when said image has a roughly horizontal inclination, and is defined as vertical when said image has a roughly vertical inclination.

8. The method for detecting an inclination angle as claimed in claim 7, wherein the image is determined as being roughly horizontally or vertically inclined based on a pixel pattern of a contour of said expanded image.

9. The method for detecting an inclination angle as claimed in claim 8, wherein said pixel patterns of a contour are classified into groups of horizontal and vertical patterns, and the number of patterns in each group is counted for said image so that said inclination angle of said image is deemed as the direction of that group with a higher number of patterns than that of the other group.

10. The method for detecting an inclination angle as claimed in any of claims 1 and 5, wherein said inclination coefficient and inclination angle are defined as follows, when the image is roughly horizontal:
(A) Horizontal pattern of 3 pixels
Coefficient is 0.
(B) (2 pixels pattern inclined from left upper to right lower) + (2 pixels horizontal pattern)
Coefficient is 0.5.
(C) (2 pixels horizontal pattern) + (2 pixels pattern inclined from left upper to right lower)
Coefficient is 0.5.
(D) (2 pixels horizontal pattern) + (2 pixels pattern inclined from a left lower to right upper)
Coefficient is - 0.5.
(E) (2 pixels pattern inclined from left lower to right upper) + (2 pixels horizontal pattern)
Coefficient is -0.5.
(F) 3 pixels pattern inclined from left upper to right lower
Coefficient is 1.
(G) 3 pixels pattern inclined from left lower to right upper
Coefficient is -1.
(H) (2 pixels pattern inclined from left upper to right lower) + (2 pixels pattern inclined from left lower to right upper)
Coefficient is 0.
(I) (2 pixels pattern inclined from left lower to right upper) + (2 pixels pattern inclined from right upper to left lower)
Coefficient is 0.
and, said inclination angle is,${\text{θ = tan}}^{\text{-1}} \text{[{0.5 (Nb + Nc) -0.5 (Nd+Ne) + Nf-Ng} / (Na+Nb} \text{+Nc+Nd+Ne+Nf+Ng+Nh+Ni)]}$ where "Na" to "Ni" refers to the number of occurences of a pattern "A" to "I".

11. The method for detecting an inclination angle as claimed in any of claims 1 and 5, wherein said inclination coefficient and inclination angle are defined as follows, when the image is roughly vertical:
(A) 3 pixels vertical pattern
Coefficient is 0.
(B) (2 pixels pattern inclined from upper right to lower left) + (2 pixels vertical pattern)
Coefficient is 0.5.
(C) (2 pixels vertical pattern) + (2 pixels pattern inclined from upper right to lower left)
Coefficient is 0.5.
(D) (2 pixels vertical pattern) + (2 pixels pattern inclined from upper left to lower right)
Coefficient is -0.5.
(E) (2 pixels pattern inclined from upper left to lower right) + (2 pixels vertical pattern)
Coefficient is -0.5.
(F) 3 pixels pattern inclined from upper left to lower right
Coefficient is -1.
(G) 3 pixels pattern inclined from lower left to upper right
Coefficient is 1.
(H) (2 pixels pattern inclined from upper left to lower right) + (2 pixels pattern inclined from upper left to lower right)
Coefficient is 0.
(I) (2 pixels pattern inclined from upper left to lower right) + (2 pixels pattern inclined from upper right to lower left) Coefficient is 0.
and, said inclination angle is,${\text{θ = tan}}^{\text{-1}} \text{[{0.5 (Nb + Nc) -0.5 (Nd+Ne) - Nf+Ng}} \text{/} \text{(Na+Nb} \text{+Nc+Nd+Ne+Nf+Ng+Nh+Ni)]}$ where "Na" to "Ni" refers to the number of occurences of a pattern "A" to "I".

12. The method for detecting an inclination angle as claimed in claim 4, wherein said inclination coefficient and inclination angle are defined as follows, when said image is roughly horizontal:
(A) (2 pixels pattern inclined from left upper to right lower) + (2 pixels horizontal pattern)
The pattern is from the bottom of the configuration.
Coefficient is 0.5.
(B) (2 pixels horizontal pattern) + (2 pixels patten inclined from left upper to right lower)
The pattern is from the upper part of the configuration.
Coefficient is 0.5.
(C) (2 pixels horizontal pattern) + (2 pixels pattern inclined from left lower to right upper)
The pattern is from the bottom of the configuration.
Coefficient is -0.5.
(D) (2 pixels pattern inclined from left lower to right upper) + (2 pixels horizontal pattern)
Coefficient is -0.5.
(E) (2 pixels pattern inclined from left lower to right upper) + (2 pixels horizontal pattern)
The pattern is from the bottom of the configuration.
Coefficient is -0.5.
(F) (2 pixels horizontal pattern) + (2 pixels pattern inclined from left lower to right upper)
The pattern is from the upper part of the configuration.
Coefficient is -0.5.
(G) (2 pixels horizontal pattern) + (2 pixels pattern inclined from left upper to right lower)
The pattern is from the bottom of the configuration.
Coefficient is 0.5.
(H) (2 pixels pattern inclined from left upper to right lower) + (2 pixels horizontal pattern)
The pattern is from the upper part of the configuration.
Coefficient is 0.5.
(I) Horizontal patternof 3 pixels
The pattern is from the bottom of the configuration.
Coefficient is 0.
(J) Horizontal pattern of 3 pixels
The pattern is from the upper part of the configuration.
Coefficient is 0.
(K) (2 pixels pattern inclined from left lower to right upper) + (2 pixels pattern inclined from right upper to left lower)
The pattern is from the bottom of the configuration.
Coefficient is 0.
(L) (2 pixels pattern inclined from left upper to right lower) + (2 pixels pattern inclined from left lower to right upper).
The pattern is from the upper part of the configuration.
Coefficient is 0.
(M) 3 pixels pattern inclined from left upper to right lower
The pattern is from the bottom of the configuration.
Coefficient is 1.
(N) 3 pixels pattern inclined from left upper to right lower
The pattern is from the upper part of the configuration.
Coefficient is 1.
(O) 3 pixels pattern inclined from left lower to right upper
The pattern is from the bottom of the configuration.
Coefficient is -1.
(P) 3 pixels pattern inclined from left lower to right upper
The pattern is from the upper part of the configuration.
Coefficient is -1.
and, said inclination angle is,${\text{θ = tan}}^{\text{-1}} \text{[{0.5 (Na+Nb+Ng+Nh) -0.5 (Nc+Nd+Ne+Nf) + Nm+Nn-No-Np}/} \text{(Na+Nb+Nc+Nd+Ne+Nf+Ng+Nh+Ni+Nj+Nk+Nl+Nm+Nn+No+Np)]}$ where "Na" to "Np" refers to the number of occurences of the patterns "A" to "P".

13. The method for detecting an inclination angle as claimed in claim 5, wherein said inclination coefficient and inclination angle are defined as follows, when said image is roughly vertical:
(A) (2 pixels vertical pattern) + (2 pixels pattern inclined from upper right to lower left)
The pattern is from the right side of the configuration.
Coefficient is 0.5.
(B) (2 pixels patten inclined from upper right to lower left)+ (2 pixels vertical pattern)
The pattern is from the left side of the configuration.
Coefficient is 0.5.
(C) (2 pixels pattern inclined from upper left to lower right) + (2 pixels pattern vertical pattern)
The pattern is from the right side of the configuration.
Coefficient is -0.5.
(D) (2 pixels vertical pattern) + (2 pixels pattern inclined from upper left to lower right)
The pattern is from the left side of the configuration.
Coefficient is -0.5.
(E) (2 pixels pattern inclined from right upper to lower left) + (2 pixels vertical pattern)
The pattern is from the right side of the configuration.
Coefficient is 0.5.
(F) (2 pixels vertical pattern) + (2 pixels pattern inclined from upper right to lower left)
The pattern is from the left side of the configuration.
Coefficient is 0.5.
(G) (2 pixels pattern inclined from upper left to lower right) + (2 pixels vertical pattern)
The pattern is from the left side of the configuration.
Coefficient is -0.5.
(H) (2 pixels vertical pattern) + (2 pixels pattern inclined from upper left to lower right)
The pattern is from the right side of the configuration.
Coefficient is -0.5.
(I) 3 pixels vertical pattern
The pattern is from the right side of the configuration.
Coefficient is 0.
(J) 3 pixels vertical pattern
The pattern is from the left side of the configuration.
Coefficient is 0.
(K) (2 pixels pattern inclined from upper left to lower to right) + (2 pixels pattern inclined from upper right to lower left)
The pattern is from the left side of the configuration.
Coefficient is 0.
(L) (2 pixels pattern inclined from upper right to lower left) + (2 pixels pattern inclined from upper left to lower right).
The pattern is from the right side of the configuration.
Coefficient is 0.
(M) 3 pixels pattern inclined from upper left to lower right
The pattern is from the left side of the configuration.
Coefficient is -1.
(N) 3 pixels pattern inclined from upper left to lower right
The pattern is from the right side of the configuration.
Coefficient is -1.
(O) 3 pixels pattern inclined from lower left to upper right
The pattern is from the right side of the configuration.
Coefficient is 1.
(P) 3 pixels pattern inclined from lower left to upper right
The pattern is from the left side of the configuration.
Coefficient is 1.
and, said inclination angle is,${\text{θ = tan}}^{\text{-1}} \text{[ {0.5(Na+Nb+Ne+Nf)-0.5(Nc+Nd+Ng+Nh)-Nm-Nn+No+Np}/} \text{(Na+Nb+Nc+Nd+Ne+Nf+Ng+Nh+Ni+Nj+Nk+Nl+Nm+Nn+No+Np)}}$ where "Na" to "Np" refers to the number of occurences of the patterns "A" to "P".

14. The method for detecting an inclination angle as claimed in any of the previous claims, said method further comprising the step of rotating said image according to the detected angle so that said image is aligned either horizontally or vertically.

## Patentansprüche

1. Verfahren zum Erkennen eines Neigungswinkels eines Bildes, das Zeilen von Zeichen aufweist, wobei der Neigungswinkel aus Neigungskoeffizienten bestimmt wird und das Verfahren die folgenden Schritte aufweist:
Vergrößern (1-7, 8-7, 11-7) des Bildes, bis in dem vergrößerten Bild die Zeichen in derselben Zeile miteinander verschmelzen, wobei dieses Verschmelzen durch Verwendung eines Unterschieds in der Anzahl der Nichthintergrundpixels (1-10, 8-10, 11-10) in den Bildern aufeinanderfolgender Vergrößerungen erkannt wird,
Aufteilen des vergrößerten Bildes (1-13, 8-13, 11-13) in eine Vielzahl von Pixelmatrizen von vorbestimmter Größe,
Klassifizieren des Pixel-Musters einer jeden Pixelmatrix als entweder horizontal oder vertikal, wie aus den Umrissen der Zeilen von verschmolzenen Zeichen erkannt,
Zählen (1-14, 8-14, 11-14) der Anzahl von Pixelmatrizen, die Pixelmuster aufweisen, die als horizontal klassifiziert wurden, und der Anzahl von Pixelmatrizen, die Pixelmuster aufweisen, die als vertikal klassifiziert wurden, um zu bestimmen (1-15, 8-15, 11-15), ob das Bild im wesentlichen horizontal oder vertikal ist,
Zuweisen von Neigungskoeffizienten zu den Pixelmatrizen, und
Berechnen des Neigungswinkels des Bildes (11-22, 8-20, 11-24) auf der Basis der Neigungskoeffizienten der Pixelmatrizen.

2. Das Verfahren zum Erfassen eines Neigungswinkels gemäß Anspruch 1, wobei der Unterschied als ein kubisches Differential der Fläche definiert ist.

3. Verfahren zum Erfassen eines Neigungswinkels nach Anspruch 1, wobei das Verfahren weiterhin die folgenden Schritte umfasst:
Ausdünnen (1-20) des vergrößerten Bildes,
Verkleinern (1-21) des ausgedünnten Bildes, um ungeeignete Teile in dem ausgedünnten Bild zu verringern, und
Klassifizieren des Pixelmusters jeder Pixelmatrix des ausgedünnten Bildes und Zuweisen eines Neigungskoeffizienten an die jeweilige Pixelmatrix und Verwenden der Neigungskoeffizienten der Pixelmatrizen zum Berechnen des Neigungswinkel des Bildes.

4. Das Verfahren zum Erfassen eines Neigungswinkels nach Anspruch 1, wobei die Pixelmatrix als horizontal oder vertikal auf der Basis eines Pixelmusters in dem äußeren Teil einer Pixelmatrix in dem Bild klassifiziert wird.

5. Das Verfahren zum Erfassen eines Neigungswinkels nach Anspruch 1, wobei die Pixelmatrix als horizontal oder vertikal auf der Basis eines Pixelmusters eines Umrisses, der von einer Anordnung in dem Bild extrahiert wurde, klassifiziert wird.

6. Das Verfahren zum Erfassen eines Neigungswinkels nach Anspruch 1, wobei der Koeffizient als Richtungsabweichungen von Abweichungen von einer Bezugsrichtung definiert ist.

7. Das Verfahren zum Erfassen eines Neigungswinkels nach Anspruch 6, wobei die Bezugsrichtung als horizontal definiert ist, wenn das Bild eine im wesentlichen horizontale Neigung hat, und als vertikal definiert ist, wenn das Bild eine im wesentlichen vertikale Neigung hat.

8. Das Verfahren zum Erfassen eines Neigungswinkels nach Anspruch 7, wobei auf der Basis eines Pixelmusters eines Umrisses des vergrößerten Bildes bestimmt wird, dass das Bild im wesentlichen horizontal oder vertikal geneigt ist.

9. Das Verfahren zum Erfassen eines Neigungswinkels nach Anspruch 8, wobei die Pixelmuster eines Umrisses in Gruppen von horizontalen und vertikalen Mustern eingeteilt werden, und die Anzahl der Muster in jeder Gruppe für das Bild gezählt wird, so dass der Neigungswinkel des Bildes als die Richtung der Gruppe mit einer höheren Anzahl von Mustern als die der anderen Gruppen angenommen wird.

10. Das Verfahren zum Erfassen eines Neigungswinkels nach einem der Ansprüche 1 bis 5, wobei der Neigungskoeffizient und der Neigungswinkel folgendermaßen definiert sind, wenn das Bild im wesentlichen horizontal ist:
(A) Horizontales Muster von 3 Pixeln
Koeffizient ist 0.
(B) (2-Pixel-Muster geneigt von links oben nach rechts unten) + (2-Pixel-Horizontal-Muster)
Koeffizient ist 0,5.
(C) (2-Pixel-Horizontal-Muster) + (2-Pixel-Muster geneigt von links oben nach rechts unten)
Koeffizient ist 0,5.
(D) (2-Pixel-Horizontal-Muster) + (2-Pixel-Muster geneigt von links unten nach rechts oben)
Koeffizient ist -0,5.
(E) (2-Pixel-Muster geneigt von links unten nach rechts oben) + (2-Pixel-Horizontal-Muster)
Koeffizient ist -0,5.
(F) 3-Pixel-Muster geneigt von links oben nach rechts unten
Koeffizient ist 1.
(G) 3-Pixel-Muster geneigt von links unten nach rechts oben
Koeffizient ist -1.
(H) (2-Pixel-Muster geneigt von links oben nach rechts unten) + (2-Pixel-Muster geneigt von links unten nach rechts oben)
Koeffizient ist 0.
(I) (2-Pixel-Muster geneigt von links unten nach rechts oben) + (2-Pixel-Muster geneigt von rechts oben nach links unten)
Koeffizient ist 0.
und der Neigungswinkel ist${\text{Θ=tan}}^{\text{-1}} \text{[{0,5(Nb+Nc)-0,5(Nd+Ne)+Nf-Ng}/(Na+Nb+Nc+Nd+Ne+Nf+Ng+Nh+Ni)]}$ wobei "Na" bis "Ni" sich auf die Anzahl des Auftretens eines Musters "A" bis "I" bezieht.

11. Das Verfahren zum Erfassen eines Neigungswinkels nach einem der Ansprüche 1 bis 5, wobei der Neigungskoeffizient und der Neigungswinkel folgendermaßen definiert sind, wenn das Bild im wesentlichen vertikal ist:
(A) 3-Pixel-Vertikal-Muster
Koeffizient ist 0.
(B) (2-Pixel-Muster geneigt von oben rechts nach unten links) + (2-Pixel-Vertikal-Muster)
Koeffizient ist 0,5.
(C) (2-Pixel-Vertikal-Muster) + (2-Pixel-Muster geneigt von oben rechts nach unten links)
Koeffizient ist 0,5.
(D) (2-Pixel-Vertikal-Muster) + (2-Pixel-Muster geneigt von oben links nach unten rechts)
Koeffizient ist -0,5.
(E) (2-Pixel-Muster geneigt von oben links nach unten rechts) + (2-Pixel-Vertikal-Muster)
Koeffizient ist -0,5.
(F) 3-Pixel-Muster geneigt von oben links nach unten rechts
Koeffizient ist -1.
(G) 3-Pixel-Muster geneigt von unten links nach oben rechts
Koeffizient ist 1.
(H) (2-Pixel-Muster geneigt von oben links nach unten rechts) + (2-PixelMuster geneigt von oben links nach unten rechts).
Koeffizient ist 0.
(I) (2-Pixel-Muster geneigt von oben links nach unten rechts) + (2-PixelMuster geneigt von oben rechts nach unten links)
Koeffizient ist 0.
und der Neigungswinkel${\text{Θ=tan}}^{\text{-1}} \text{[{0,5(Nb+Nc)-0,5(Nd+Ne)-Nf+Ng}/(Na+Nb+Nc+Nd+Ne+Nf+Ng+Nh+Ni)]}$ wobei "Na" bis "Ni" sich auf die Anzahl des Auftretens eines Musters "A" bis "I" bezieht.

12. Das Verfahren zum Erfassen eines Neigungswinkels nach Anspruch 4, wobei der Neigungskoeffizient und der Neigungswinkel folgendermaßen definiert sind, wenn das Bild im wesentlichen horizontal ist:
(A) (2-Pixel-Muster geneigt von links oben nach rechts unten) + (2-Pixel-Horizontal-Muster)
Das Muster ist von dem unteren Teil der Anordnung.
Der Koeffizient ist 0,5.
(B) (2-Pixel-Horizontal-Muster) + (2-Pixel-Muster geneigt von links oben nach rechts unten)
Das Muster ist von dem oberen Teil der Anordnung.
Koeffizient ist 0,5.
(C) (2-Pixel-Horizontal-Muster) + (2-Pixel-Muster geneigt von links unten nach rechts oben)
Das Muster ist von dem unteren Teil der Anordnung.
Koeffizient ist -0,5.
(D) (2-Pixel-Muster geneigt von links unten nach rechts oben) + (2-Pixel-Horizontal-Muster)
Koeffizient ist -0,5.
(E) (2-Pixel-Muster geneigt von links unten nach rechts oben) + (2-Pixel-Horizontal-Muster)
Das Muster ist von dem unteren Teil der Anordnung.
Koeffizient ist -0,5.
(F) (2-Pixel-Horizontal-Muster) + (2-Pixel-Muster geneigt von links unten nach rechts oben)
Das Muster ist von dem oberen Teil der Anordnung.
Koeffizient ist -0,5.
(G) (2-Pixel-horizontal-Muster) + (2-Pixel-Muster geneigt von links oben nach rechts unten)
Das Muster ist von dem unteren Teil der Anordnung.
Koeffizient ist 0,5.
(H) (2-Pixel-Muster geneigt von links oben nach rechts unten) + (2-Pixel-Horizontal-Muster)
Das Muster ist von dem oberen Teil der Anordnung.
Der Koeffizient ist 0,5.
(I) Horizontales Muster von 3 Pixeln
Das Muster ist von dem unteren Teil der Anordnung
Koeffizient ist 0.
(J) Horizontales Muster von 3 Pixeln
Das Muster ist von dem oberen Teil der Anordnung.
Koeffizient ist 0.
(K) (2-Pixel-Muster geneigt von links unten nach rechts oben) + (2-PixelMuster geneigt von rechts oben nach links unten)
Das Muster ist von dem unteren Teil der Anordnung
Koeffizient ist 0.
(L) (2-Pixel-Muster geneigt von links oben nach rechts unten) + (2-PixelMuster geneigt von links unten nach rechts oben).
Das Muster ist von dem oberen Teil der Anordnung.
Koeffizient ist 0.
(M) 3-Pixel-Muster geneigt von links oben nach rechts unten
Das Muster ist von dem unteren Teil der Anordnung.
Koeffizient ist 1.
(N) 3-Pixel-Muster geneigt von links oben nach rechts unten
Das Muster ist von dem oberen Teil der Anordnung.
Koeffizient ist 1.
(O) 3-Pixel-Muster geneigt von links unten nach rechts oben
Das Muster ist von dem unteren Teil der Anordnung.
Koeffizient ist -1.
(P) 3-Pixel-Muster geneigt von links unten nach rechts oben
Das Muster ist von dem oberen Teil der Anordnung.
Koeffizient ist -1.
und der Neigungswinkel ist${\text{Θ=tan}}^{\text{-1}} \text{[{0,5(Na+Nb+Ng+Nh)-0,5(Nc+Nd+Ne+Nf)+Nm+Nn-No-} \text{Np}/(Na+Nb+Nc+Nd+Ne+Nf+Ng+Nh+Ni+Nj+Nk+Nl+Nm+Nn+No+Np)]}$ wobei "Na" bis "Np" sich auf die Anzahl des Auftretens der Muster "A" bis "P" bezieht.

13. Das Verfahren zum Erfassen eines Neigungswinkels nach Anspruch 5, wobei der Neigungskoeffizient und der Neigungswinkel folgendermaßen definiert sind, wenn das Bild im wesentlichen vertikal ist:
(A) (2-Pixel-Vertikal-Muster) + (2-Pixel-Muster geneigt von oben rechts nach unten links)
Das Muster ist von der rechten Seite der Anordnung.
Koeffizient ist 0,5.
(B) (2-Pixel-Muster geneigt von oben rechts nach unten links) + (2-Pixel-Vertikal-Muster)
Das Muster ist von der linken Seite der Anordnung.
Koeffizient ist 0,5.
(C) (2-Pixel-Muster geneigt von oben links nach unten rechts) + (2-PixelMuster vertikales Muster)
Das Muster ist von der rechten Seite der Anordnung.
Koeffizient ist -0,5.
(D) (2-Pixel-Vertikal-Muster) + (2-Pixel-Muster geneigt von oben links nach unten rechts)
Das Muster ist von der linken Seite der Anordnung.
Koeffizient ist -0,5.
(E) (2-Pixel-Muster geneigt von rechts oben nach unten links) + (2-Pixel-Vertikal-Muster)
Das Muster ist von der rechten Seite der Anordnung.
Koeffizient ist 0,5.
(F) (2-Pixel-Vertikal-Muster) + (2-Pixel-Muster geneigt von oben rechts nach unten links)
Das Muster ist von der linken Seite der Anordnung.
Koeffizient ist 0,5.
(G) (2-Pixel-Muster geneigt von oben links nach unten rechts) + (2-Pixel-Vertikal-Muster)
Das Muster ist von der linken Seite der Anordnung.
Koeffizient ist -0,5.
(H) (2-Pixel-Vertikal-Muster) + (2-Pixel-Muster geneigt von oben links nach unten rechts)
Das Muster ist von der rechten Seite der Anordnung.
Koeffizient ist -0,5.
(I) 3-Pixel-Vertikal-Muster
Das Muster ist von der rechten Seite der Anordnung.
Koeffizient ist 0.
(J) 3-Pixel-Vertikal-Muster
Das Muster ist von der linken Seite der Anordnung.
Koeffizient ist 0.
(K) (2-Pixel-Muster geneigt von oben links nach unten rechts) + (2-PixelMuster geneigt von oben rechts nach unten links)
Das Muster ist von der linken Seite der Anordnung.
Koeffizient ist 0.
(L) (2-Pixel-Muster geneigt von oben rechts nach unten links) + (2-PixelMuster geneigt von oben links nach unten rechts).
Das Muster ist von der rechten Seite der Anordnung.
Koeffizient ist 0.
(M) 3-Pixel-Muster geneigt von oben links nach unten rechts.
Das Muster ist von der linken Seite der Anordnung.
Koeffizient ist -1.
(N) 2-Pixel-Muster geneigt von oben links nach unten rechts.
Das Muster ist von der rechten Seite der Anordnung.
Koeffizient ist -1.
(O) 3 -Pixel-Muster geneigt von unten links nach oben rechts.
Das Muster ist von der rechten Seite der Anordnung.
Koeffizient ist 1.
(P) 3 -Pixel-Muster geneigt von unten links nach oben rechts.
Das Muster ist von der linken Seite der Anordnung.
Koeffizient ist 1.
und der Neigungswinkel ist${\text{Θ=tan}}^{\text{-1}} \text{[{0,5(Na+Nb+Ne+Nf)-0,5(Nc+Nd+Ng+Nh)-Nm-Nn+No+Np}/} \text{(Na+Nb+Nc+Nd+Ne+Nf+Ng+Nh+Ni+Nj+Nk+Nl+Nm+Nn+No+Np)]}$ wobei "Na" bis "Np" sich auf die Anzahl des Auftretens der Muster "A" bis "P" bezieht.

14. Das Verfahren zum Erfassen eines Neigungswinkels nach einem der vorangehenden Ansprüche, wobei das Verfahren weiterhin den Schritt des Drehens des Bildes entsprechend dem erfassten Winkel umfasst, so dass das Bild entweder horizontal oder vertikal ausgerichtet wird.

## Revendications

1. Méthode pour déterminer un angle d'inclinaison d'une image contenant des lignes de caractères, ledit angle d'inclinaison étant déterminé à partir de coefficients d'inclinaison, ladite méthode comprenant les étapes consistant :
- à dilater (1-7, 8-7, 11-7) ladite image jusqu'à ce que des caractères situés sur la même ligne fusionnent entre eux dans l'image dilatée, ladite fusion étant obtenue en utilisant une différence dans le nombre de pixels n'appartenant pas à l'arrière-plan (1-10, 8-10, 11-10) dans des images dilatées successives,
- à diviser ladite image dilatée (1-13, 8-13, 11-13) en une pluralité de matrices de pixels de tailles prédéterminées,
- à classer le motif de pixel de chaque matrice de pixels comme étant soit horizontal soit vertical, tel que détecté à partir des contours desdites lignes de caractères fusionnés,
- à compter (1-14, 8-14, 11-14) le nombre de matrices de pixels qui ont des motifs de pixel classés comme étant horizontaux et le nombre de matrices de pixels qui ont des motifs de pixel classés comme étant verticaux, de façon à déterminer (1-15, 8-15, 11-15) si l'image est approximativement horizontale ou verticale,
- à attribuer des coefficients d'inclinaison auxdites matrices de pixels, et
- à calculer l'angle d'inclinaison de l'image (1-22, 8-20, 11-24) sur la base des coefficients d'inclinaison des matrices de pixels.

2. Méthode pour déterminer un angle d'inclinaison selon la revendication 1, dans laquelle ladite différence est définie en tant que différentielle cubique de ladite zone.

3. Méthode pour déterminer un angle d'inclinaison selon la revendication 1, ladite méthode comprenant de plus les étapes consistant :
- à amincir (1-20) ladite image dilatée,
- à contracter (1-21) l'image amincie pour réduire les parties incorrectes dans ladite image amincie, et
- à classer le motif de pixel de chaque matrice de pixels de l'image amincie et à attribuer un coefficient d'inclinaison à la matrice de pixels respective, et à utiliser lesdits coefficients d'inclinaison desdites matrices de pixels pour calculer ledit angle d'inclinaison de l'image.

4. Méthode pour déterminer un angle d'inclinaison selon la revendication 1, dans laquelle la matrice de pixels est classée comme étant horizontale ou verticale par rapport à un motif de pixel situé sur la partie extérieure d'une matrice de pixels dans ladite image.

5. Méthode pour déterminer un angle d'inclinaison selon la revendication 1, dans laquelle la matrice de pixels est classée comme étant horizontale ou verticale par rapport à un motif de pixels d'un contour extrait d'une configuration dans ladite image.

6. Méthode pour déterminer un angle d'inclinaison selon la revendication 1, dans laquelle ledit coefficient d'inclinaison est défini sous forme de déviations de direction par rapport à une direction de référence.

7. Méthode pour déterminer un angle d'inclinaison selon la revendication 6, dans laquelle ladite direction de référence est définie comme étant horizontale lorsque ladite image présente une inclinaison approximativement horizontale, et est définie comme étant verticale lorsque ladite image présente une inclinaison approximativement verticale.

8. Méthode pour déterminer un angle d'inclinaison selon la revendication 7, dans laquelle l'image est déterminée comme étant approximativement horizontalement ou verticalement inclinée par rapport à un motif de pixel d'un contour de ladite image dilatée.

9. Méthode pour déterminer un angle d'inclinaison selon la revendication 8, dans laquelle lesdits motifs de pixels d'un contour sont classés dans des groupes de motifs horizontaux et verticaux, et le nombre de motifs classés dans chaque groupe est compté pour ladite image, de sorte que ledit angle d'inclinaison de ladite image est considéré comme étant la direction du groupe ayant un nombre de motifs supérieur à celui de l'autre groupe.

10. Méthode pour déterminer un angle d'inclinaison selon l'une quelconque des revendications 1 et 5, dans laquelle lesdits coefficients d'inclinaison et angle d'inclinaison sont définis comme suit, lorsque l'image est approximativement horizontale :
(A) Motif horizontal de 3 pixels
Le coefficient est égal à 0 ;
(B) (Motif de 2 pixels incliné d'en haut à gauche à en bas à droite)+(motif horizontal de 2 pixels)
Le coefficient est égal à 0,5 ;
(C) (Motif horizontal de 2 pixels)+(motif de 2 pixels incliné d'en haut à gauche à en bas à droite)
Le coefficient est égal à 0,5 ;
(D) (Motif horizontal de 2 pixels)+(motif de 2 pixels incliné d'en bas à gauche à en haut à droite)
Le coefficient est égal à -0,5 ;
(E) (Motif de 2 pixels incliné d'en bas à gauche à en haut à droite)+(motif horizontal de 2 pixels)
Le coefficient est égal à -0,5 ;
(F) Motif de 3 pixels incliné d'en haut à gauche à en bas à droite
Le coefficient est égal à 1 ;
(G) Motif de 3 pixels incliné d'en bas à gauche à en haut à droite
Le coefficient est égal à -1 ;
(H) (Motif de 2 pixels incliné d'en haut à gauche à en bas à droite)+(motif de 2 pixels incliné d'en bas à gauche à en haut à droite)
Le coefficient est égal à 0 ;
(I) (Motif de 2 pixels incliné d'en bas à gauche à en haut à droite)+(motif de 2 pixels incliné d'en haut à droite à en bas à gauche)
Le coefficient est égal à 0 ;
et ledit angle d'inclinaison est,${\text{θ=tan}}^{\text{-1}} \text{[{0,5(Nb+Nc)-0,5(Nd+Ne)+Nf-} \text{Ng}/(Na+Nb+Nc+Nd+Ne+Nf+Ng+Nh+Ni)]}$ dans lequel "Na" à "Ni" font référence au nombre d'occurrences d'un Motif "A" à "I".

11. Méthode pour déterminer un angle d'inclinaison selon l'une quelconque des revendications 1 et 5, dans laquelle lesdits coefficients d'inclinaison et angle d'inclinaison sont définis comme suit, lorsque l'image est approximativement verticale :
(A) Motif vertical de 3 pixels
Le coefficient est égal à 0 ;
(B) (Motif de 2 pixels incliné d'en haut à droite à en bas à gauche)+(motif vertical de 2 pixels)
Le coefficient est égal à 0,5 ;
(C) (Motif vertical de 2 pixels)+(motif de 2 pixels incliné d'en haut à droite à en bas à gauche)
Le coefficient est égal à 0,5 ;
(D) (Motif vertical de 2 pixels)+(motif de 2 pixels incliné d'en haut à gauche à en bas à droite)
Le coefficient est égal à -0,5 ;
(E) (Motif de 2 pixels incliné d'en haut à gauche à en bas à droite)+(motif vertical de 2 pixels)
Le coefficient est égal à -0,5 ;
(F) Motif de 3 pixels incliné d'en haut à gauche à en bas à droite
Le coefficient est égal à -1 ;
(G) Motif de 3 pixels incliné d'en bas à gauche à en haut à droite
Le coefficient est égal à 1 ;
(H) (Motif de 2 pixels incliné d'en haut à gauche à en bas à droite)+(motif de 2 pixels incliné d'en haut à gauche à en bas à droite)
Le coefficient est égal à 0 ;
(I) (Motif de 2 pixels incliné d'en haut à gauche à en bas à droite)+(motif de 2 pixels incliné d'en haut à droite à en bas à gauche)
Le coefficient est égal à 0 ;
et ledit angle d'inclinaison est,${\text{θ=tan}}^{\text{-1}} \text{[{0,5(Nb+Nc)-0,5(Nd+Ne)-} \text{Nf+Ng}/(Na+Nb+Nc+Nd+Ne+Nf+Ng+Nh+Ni)]}$ dans lequel "Na" à "Ni" font référence au nombre d'occurrences d'un motif "A" à "I".

12. Méthode pour déterminer un angle d'inclinaison selon la revendication 4, dans laquelle lesdits coefficients d'inclinaison et angle d'inclinaison sont définis comme suit, lorsque ladite image est approximativement horizontale :
(A) (Motif de 2 pixels incliné d'en haut à gauche à en bas à droite)+(motif horizontal de 2 pixels)
Le motif est issu du bas de la configuration ;
Le coefficient est égal à 0,5 ;
(B) (Motif horizontal de 2 pixels)+(motif de 2 pixels incliné d'en haut à gauche à en bas à droite)
Le motif est issu de la partie supérieure de la configuration ;
Le coefficient est égal à 0,5 ;
(C) (Motif horizontal de 2 pixels)+(motif de 2 pixels incliné d'en bas à gauche à en haut à droite)
Le motif est issu du bas de la configuration ;
Le coefficient est égal à -0,5 ;
(D) (Motif de 2 pixels incliné d'en bas à gauche à en haut à droite)+(motif horizontal de 2 pixels)
Le coefficient est égal à -0,5 ;
(E) (Motif de 2 pixels incliné d'en bas à gauche à en haut à droite)+(motif horizontal de 2 pixels)
Le motif est issu du bas de la configuration ;
Le coefficient est égal à -0,5 ;
(F) (Motif horizontal de 2 pixels)+(motif de 2 pixels incliné d'en bas à gauche à en haut à droite)
Le motif est issu de la partie supérieure de la configuration ;
Le coefficient est égal à -0,5 ;
(G) (Motif horizontal de 2 pixels)+(motif de 2 pixels incliné d'en haut à gauche à en bas à droite)
Le motif est issu du bas de la configuration ;
Le coefficient est égal à 0,5 ;
(H) (Motif de 2 pixels incliné d'en haut à gauche à en bas à droite)+(motif horizontal de 2 pixels)
Le motif est issu de la partie supérieure de la configuration ;
Le coefficient est égal à 0,5 ;
(I) Motif horizontal de 3 pixels
Le motif est issu du bas de la configuration ;
Le coefficient est égal à 0 ;
(J) Motif horizontal de 3 pixels
Le motif est issu de la partie supérieure de la configuration ;
Le coefficient est égal à 0 ;
(K) (Motif de 2 pixels incliné d'en bas à gauche à en haut à droite)+(motif de 2 pixels incliné d'en haut à droite à en bas à gauche)
Le motif est issu du bas de la configuration ;
Le coefficient est égal à 0 ;
(L) (Motif de 2 pixels incliné d'en haut à gauche à en bas à droite)+(motif de 2 pixels incliné d'en bas à gauche à en haut à droite)
Le motif est issu de la partie supérieure de la configuration ;
Le coefficient est égal à 0 ;
(M) Motif de 3 pixels incliné d'en haut à gauche à en bas à droite
Le motif est issu du bas de la configuration ;
Le coefficient est égal à 1 ;
(N) Motif de 3 pixels incliné d'en haut à gauche à en bas à droite
Le motif est issu de la partie supérieure de la configuration ;
Le coefficient est égal à 1 ;
(O) Motif de 3 pixels incliné d'en bas à gauche à en haut à droite
Le motif est issu du bas de la configuration ;
Le coefficient est égal à -1 ;
(P) Motif de 3 pixels incliné d'en bas à gauche à en haut à droite
Le motif est issu de la partie supérieure de la configuration ;
Le coefficient est égal à -1 ;
et ledit angle d'inclinaison est,${\text{θ=tan}}^{\text{-1}} \text{[{0,5(Na+Nb+Ng+Nh)-} \text{0,5(Nc+Nd+Ne+Nf)+Nm+Nn+No+Np}/} \text{(Na+Nb+Nc+Nd+Ne+Nf+Ng+Nh+Ni+Nj+Nk+Nl+Nm+Nn+No+Np)]}$ dans lequel "Na" à "Np" font référence au nombre d'occurrences des Motifs "A" à "P".

13. Méthode pour déterminer un angle d'inclinaison selon la revendication 5, dans laquelle lesdits coefficients d'inclinaison et angle d'inclinaison sont définis comme suit, lorsque ladite image est approximativement verticale :
(A) (Motif vertical de 2 pixels)+(motif de 2 pixels incliné d'en haut à droite à en bas à gauche
Le motif est issu de la partie droite de la configuration ;
Le coefficient est égal à 0,5 ;
(B) (Motif de 2 pixels incliné d'en haut à droite à en bas à gauche)+(motif vertical de 2 pixels)
Le motif est issu de la partie gauche de la configuration ;
Le coefficient est égal à 0,5 ;
(C) (Motif de 2 pixels incliné d'en haut à gauche à en bas à droite)+(motif vertical de 2 pixels)
Le motif est issu de la partie droite de la configuration ;
Le coefficient est égal à -0,5 ;
(D) (Motif vertical de 2 pixels)+(motif de 2 pixels incliné d'en haut à gauche à en bas à droite)
Le motif est issu de la partie gauche de la configuration ;
Le coefficient est égal à -0,5 ;
(E) (Motif de 2 pixels incliné d'en haut à droite à en bas à gauche)+(motif vertical de 2 pixels)
Le motif est issu de la partie droite de la configuration ;
Le coefficient est égal à 0,5 ;
(F) (Motif vertical de 2 pixels)+(motif de 2 pixels incliné d'en haut à droite à en bas à gauche)
Le motif est issu de la partie gauche de la configuration ;
Le coefficient est égal à 0,5 ;
(G) (Motif de 2 pixels incliné d'en haut à gauche à en bas à droite)+(motif vertical de 2 pixels)
Le motif est issu de la partie gauche de la configuration ;
Le coefficient est égal à -0,5 ;
(H) (Motif vertical de 2 pixels)+(motif de 2 pixels incliné d'en haut à gauche à en bas à droite)
Le motif est issu de la partie droite de la configuration ;
Le coefficient est égal à -0,5 ;
(I) Motif vertical de 3 pixels
Le motif est issu de la partie droite de la configuration ;
Le coefficient est égal à 0 ;
(J) Motif vertical de 3 pixels
Le motif est issu de la partie gauche de la configuration ;
Le coefficient est égal à 0 ;
(K) (Motif de 2 pixels incliné d'en haut à gauche à en bas à droite)+(motif de 2 pixels incliné d'en haut à droite à en bas à gauche)
Le motif est issu de la partie gauche de la configuration ;
Le coefficient est égal à 0 ;
(L) (Motif de 2 pixels incliné d'en haut à droite à en bas à gauche)+(motif de 2 pixels incliné d'en haut à gauche à en bas à droite)
Le motif est issu de la partie droite de la configuration ;
Le coefficient est égal à 0 ;
(M) Motif de 3 pixels incliné d'en haut à gauche à en bas à droite
Le motif est issu de la partie gauche de la configuration ;
Le coefficient est égal à -1 ;
(N) Motif de 3 pixels incliné d'en haut à gauche à en bas à droite
Le motif est issu de la partie droite de la configuration ;
Le coefficient est égal à -1 ;
(O) Motif de 3 pixels incliné d'en bas à gauche à en haut à droite
Le motif est issu de la partie droite de la configuration ;
Le coefficient est égal à 1 ;
(P) Motif de 3 pixels incliné d'en bas à gauche à en haut à droite
Le motif est issu de la partie gauche de la configuration ;
Le coefficient est égal à 1 ;
et ledit angle d'inclinaison est,${\text{θ=tan}}^{\text{-1}} \text{[{0,5(Na+Nb+Ne+Nf)-0,5(Nc+Nd+Ng+Nh)-Nm-} \text{Nn+No+Np}/ (Na+Nb+Nc+Nd+Ne+Nf+Ng+Nh+Ni+Nj+Nk+Nl+Nm+Nn+No+Np)]}$ dans lequel "Na" à "Np" font référence au nombre d'occurrences des Motifs "A" à "P".

14. Méthode pour déterminer un angle d'inclinaison selon l'une quelconque des revendications précédentes, ladite méthode comprenant de plus l'étape consistant à faire tourner ladite image selon l'angle détecté, de sorte que ladite image soit alignée soit horizontalement, soit verticalement.
